# EUROPEAN PATENT SPECIFICATION

(11) **EP 4 536 741 B1**
(45) Date of publication and mention of the grant of the patent: **21.01.2026**
(21) Application number: 23731274.9
(22) Date of filing: 07.06.2023
(51) Int. Cl.: C08J 11/26, C08G 69/48, C08J 11/28, C08G 69/04

(54) **RECYCLING METHOD FOR PRODUCING A POLYAMIDE COMPOUND**
RECYCLINGVERFAHREN ZUR HERSTELLUNG EINER POLYAMIDVERBINDUNG
PROCÉDÉ DE RECYCLAGE POUR PRODUIRE UN COMPOSÉ POLYAMIDE

(30) Priority: 08.06.2022 EP 22177893
(43) Date of publication of application: 16.04.2025
(73) Proprietor: BASF SE, 67056 Ludwigshafen am Rhein (DE)
(72) Inventor: DESBOIS, Philippe, 67056 Ludwigshafen (DE)
(74) Representative: BASF IP Association
(86) International application number: PCT/EP2023/065227
(87) International publication number: WO 2023/237603

(56) References cited:
- WO-A1-2011/138397
- WO-A1-2018/165641
- WO-A1-2020/041259
- FR-A1- 3 107 059
- JP-A- 2001 200 054
- JP-A- H09 234 789
- US-B1- 6 187 877

## Description

The present invention relates to a method for manufacturing a polyamide B comprising melt-mixing a polyamide A and a salt C of a diacid and a diamine, wherein the polyamide B has a lower viscosity number than the polyamide A, and having a specific ratio of the ratio of the concentration of amino end groups of polyamide B to the concentration of amino end groups of polyamide A to the ratio of the concentration of carboxyl end groups of polyamide B to the concentration of carboxyl end groups of polyamide A; a polyamide B obtained by the abovementioned process; a polyamide B1 constructed from a polyamide B* and units derived from a diacid and a diamine forming the salt C; a polyamide composition comprising: the polyamide B or the polyamide B1; a filler material (D) and optionally at least one further additive (E); a polymer product comprising the polyamide B, the polyamide B1 or the polyamide composition; the use of the polyamide B, the polyamide B1 or the polyamide composition for producing polymer products; and a process for preparing a polymer product comprising the polyamide B, the polyamide B1 or the polyamide composition.

### BACKGROUND OF THE INVENTION

Exhibiting high temperature and electrical resistances, polyamides (nylon) are considered as high performance plastics and are widely used in automotive and transportation markets, consumer goods, electrical and electronics applications and in fiber production, among others. In the course of environmental measures, the material recycling of polyamide waste has an increasing importance. Polyamides are a class of compounds suitable for chemical recycling. The chemical recycling via depolymerization of the polyamides is a promising approach to save fossil feedstocks in the monomer synthesis and to reduce the amount of plastic waste.

Examples for known recycling processes via depolymerization are described below:
US3069465 relates to a process for recovering adipic acid and hexamethylene diamine from polyhexamethylene adipamide (PA 66) by continuous hydrolysis of said adipamide in aqueous sulfuric acid.

U. Cesarek et al., ACS Sustainable Chem. Eng., 2020, 8, 16274-16282 relates to a chemical recycling process for aliphatic polyamides (PAs) (PA 66, PA 1010, PA 11, and PA 12), whereby PAs are converted exclusively into their constituent monomers even in the presence of reinforcement additives, such as carbon- and glass-fibers. The PA hydrolysis reaction is performed under microwave irradiation in the presence of HCl as an acid catalyst.

US5310905 relates to a process for recovering caprolactam from waste polycaprolactam comprising supplying an acid of the formula 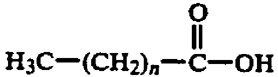 where n is 0 to 4 and the polycaprolactam to an autoclave in an amount of at least one mole of acid for every two moles of repeat units of the polymer, heating the mixture at autogenous pressure or greater for a time sufficient to depolymerize the polymer and form a mixture of caprolactam and a 6-alkylamidohexanoic acid and separating caprolactam from the mixture.

In the recycling processes mentioned above, the monomers of the respective polyamides are recovered. Said monomers may then be - again - polymerized, optionally in the presence of fresh (i.e. non recycled) monomers, for obtaining polyamides.

In the processes mentioned above, the molecular weight of the polyamides is reduced by the addition of acids. However, molecular weight reduction by acids is difficult to control due to the high reaction rates in the melt and leads to a significant deterioration of the mechanical properties. Furthermore, the control of such reactions becomes more difficult when polyamide starting materials are used which have an unspecified composition and/or initial viscosity, e.g. mixed production waste and/or recycling materials. Such materials are therefore not used for the production of high-quality products, as targeted viscosity adjustment would require extensive preliminary investigations and test runs.

However, from an environmental point of view, a recycling of poyamides by controlled partial deploymerization is advantageous, especially in cases where lower grade polyamide is needed.

There are processes known in the art concerning a viscosity adjustment/control. However, said processes are no recycling processes for polyamides, but just adjustment/controlling processes.

EP3553113A1 relates to a process for controlling the molecular structure and selective functionalization of polyamides, comprising the reaction of a polyamide with at least two of the following additives: a) a first additive comprising an acid and/or acid anhydride and a preferably polymeric carrier, b) a second additive comprising an oxazoline and/or amine optionally mixed with a carrier, c) a third additive comprising a compound for chain extension or chain branching optionally mixed with a carrier, wherein the reaction of the polyamide with the at least two additives is operated in a way that the reaction with one additive is carried out first, following by the reaction with a further additive.

WO 2018/072875 concerns an additive for the controlled viscosity adjustment of polycondensates, comprising an acid and/or acid anhydride and a carrier, preferably a polymeric carrier, characterized in that the acid and/or the acid anhydride is uniformly distributed in the carrier, a process for preparing the additive, a process for the controlled viscosity adjustment of polycondensates and the use of the additive for the controlled viscosity adjustment of polycondensates.

A process concerning recycling by a partial degradation of polyamides is disclosed in DE4421239 A1. DE4421239 A1 relates to a process for the recycling of high-molecular-weight nylon 6 (polyamide 6), to a repolymer prepared by this process, and to a process for recycling high-molecular-weight nylon 6 or used plastic parts made from nylon 6 using a common depolymerisation step in the presence of caprolactam, water and acid to give a defined viscosity level of the melt, from which, after removal of the component which is insoluble in the low-viscosity melt, the remaining material is repolymerised or degraded to give a repolymer which can be further processed or to give caprolactam.

In B. Formisano et al. "Recycling of cast polyamide waste with a twin-screw-extruder", 24.

Stuttgarter Kunststoffkolloquium, uploaded by Christian Bonten on 02 July 2015, cast polyamide 6 (PA6G) waste is processed into an extrudable polyamide by compounding with suitable additives, which are not specified. Rheological and mechanical analyses reveal both that use of a lubricant is especially expedient and that oxidants lead to a material with low viscosity which can be injection molded.

FR 3 107 059 A1 relates to a process for processing a polyamide composition intended to be recycled comprising the steps (i) supplying the mixture comprising the polyamide intended to be recycled, polyamide chain scissors and optionally one or more fillers and/or additives; (ii) kneading the mixture in a molten state, thereby obtaining a composition having a target intrinsic viscosity; (iii) recovery of the composition obtained in step (ii). Suitable chain scissors are selected from water, carboxylic acids, amino acids and/or mixtures thereof.

WO 2020/041259 A1 relates to a method of reducing the relative viscosity (RV) of a polyamide melt, the method comprising: treating a first polyamide having a RV of 45 or greater with an additive mixture comprising an organic dicarboxylic acid having a specific particle size distribution with a second polyamide having a specific particle size distribution; and melting the first polyamide treated with the additive mixture.

US 6,187,877 B1 relates to a process for preparing a polymer based on a dicarboxylic acid and a diamine by polycondensation in an extruder.

WO 2011/138397 A1 relates to a process for the preparation of a polyamide containing monomer units of 1,4-diaminobutane and an aliphatic linear carboxylic acid, as well as PA-410 obtainable by this process and products made therefrom.

JP 2001 200054 A relates to a method for producing a nylon 6 copolymer and a fiber having a good dyeability with a basic dye. It is mentioned that the nylon 6 copolymer is prepared by reaction of an ε-caprolactam aqueous solution containing a salt of a dicarboxylic acid and a diamine and/or an amino carboxylic acid.

JP H09 234789 A relates to a method for producing a polyamide axially stretched film. The polyamide is a terpolymer based on ε-caprolactam (85 to 99 wt.%), aminododecanoic acid (0.5 to 5 wt.%) and an equimolar salt of hexamethylene diamine and adipic acid (0.5 to 10 wt.%).

WO 2018/165641 A1 relates to polyamide compositions for use in forming wire or cable jacket compositions. The polyamide compositions include a component of polyamide 6/66 copolymer formed from substantially randomly distributed caprolactam monomers and hexamethylene diamine monomers.

It is an object of the present invention to provide a recycling process for polyamides, especially for post-industrial and/or post consumer polyamide waste originating from extrusion industry, by molecular weight reduction of the polyamide which enables the production of a recycled polyamide with good flowability and sufficient melt stability especially for injection molding applications, without the need for a full depolymerization (recovering the monomers) followed by a repolymerization of the recovered monomers.

To obtain an especially injection-moldable polyamide compound a method is desirable which allows for a defined and homogeneous viscosity reduction and, in parallel, avoids further degradation effects of the produced compounds.

The object is solved by a method for manufacturing a polyamide B comprising melt-mixing a polyamide A and a salt C of a diacid and a diamine,
wherein the polyamide B has a lower viscosity number than the polyamide A, and
wherein the ratio of the ratio of the concentration of amino end groups of polyamide B to the concentration of amino end groups of polyamide A (C_{NH2B}/C_{NH2A}), to the ratio of the concentration of carboxyl end groups of polyamide B to the concentration of carboxyl end groups of polyamide A (C_{COOHB}/_{CCOOHA}), in polyamide B ((c_{NH2B}/c_{NH2A})/(c_{COOHB}/c_{COOHA})) is 0.8 to 1.2.

Preferably, (c_{NH2B}/c_{NH2A})/(c_{COOHB}/c_{COOHA}) is 0.9 to 1.1.

The viscosity number (VN) of the polyamides and polyamide compositions according to the present invention is measured according to EN ISO 307: 2019 in sulfuric acid (0.5 % [m/v] of polyamide in 96wt.-% [m/m] sulfuric acid at 25°C).

The melt volume-flow rate (MVR) of the polyamides according to the present invention is measured according to EN ISO 1133-1:2011, procedure A.

The concentration of amino end groups (AEG [meq/kg]) of the polyamides disclosed in the present invention is measured by means of a potentiometric titration of polyamide-methanol phenol solution with aqueous hydrochloric acid. The concentration of carboxyl end groups (CEG [meq/kg]) of the polyamides disclosed in the present invention is measured by means of a titration of a polyamide benzyl alcohol solution with alcoholic potassium hydroxide solution.

The object is further solved by a polyamide B1 constructed from
a) 99.00 to 99,99 % by weight, preferably 99.10 to 99.90 % by weight of polyamide B* formed from units selected from one or more diamines in combination with one or more diacids, one or more lactams and mixtures thereof, and
b) 0.01 to 1 % by weight, preferably 0.1 to 0.9 % by weight of units derived from a diacid and a diamine forming a salt C,
wherein the units derived from the diacid and the diamine forming the salt C are different from the units forming the polyamide B*.

The object is further solved by a polyamide composition comprising:
(i) a polyamide B1 according to the present invention; and
(ii) optionally a filler material (D) and
(iii) optionally at least one further additive (E),
wherein at least either one filler material (D) or one further additive (E) is present.

The object is further solved by a polymer product, preferably an injection-molded part comprising the polyamide B1 or the polyamide composition according to the present invention; by the use of the polyamide B1 or the polyamide composition according to the present invention for producing polymer products, especially injection-molded parts and by a process for preparing polymer products comprising converting the polyamide B1 or the polyamide composition according to the present invention, preferably by a process for preparing moldings comprising injection-molding the polyamide B1 or the polyamide composition according to the present invention.

The present invention allows keeping the ratio of the concentration of end-groups (amino groups and carboxylic acid groups) of the starting polyamide (with a deviation of about +/- 20%, preferably about +/- 10%). As a result the melt stability of the recycled polyamide is insured (MVR over time), i.e. the MVR does not increase over the time or increases over the time for less than 5%, preferably less than 3.5%, more preferably, the MVR does not increase over the time, prerequisite for an application of the recycled polymer, especially in injection molding, preferably at a low concentration of additives.

Generally, polyamide B and also polyamide A may have any ratio of the concentration of amino end groups to the concentration of carboxyl end groups. Suitable ratios are ≥ 0.2, preferably ≥ 0.40, more preferably ≥ 0.70.

In the process of the present invention, only low amounts of a salt of a diacid and a diamine are necessary. The "salt of a diacid and diamine" mentioned in the present invention may be a salt of a single diacid and a single diamine. However, it is also possible that a mixture of two or more diacids and/or a mixture of two or more diamines is present in the melt-mixture.

### Salt of a diacid and diamine

Preferably, the salt of a diacid and diamine is present in an amount of 0.01 to 1 % by weight, more preferably 0.1 to 0.9 % by weight, most preferably 0.15 to 0.5 % by weight, based on polyamide A. The diamine and the diacid are preferably present in a stoichiometric amount, generally with an optional deviation from stoichiometry of 5 to 10%. In the case that the (one or more) diacid and the (one or more) diamine are not employed in stoichiometric amounts necessary for forming a salt, the amount mentioned relates to the salt formed by the (one or more) diacid and the (one or more) diamine, and surplus free diacid or diamine may be present in addition to the amount of salt mentioned.

The diacid is a dicarboxylic acid. In a preferred embodiment, the diacid is selected from the group consisting of adipic, glutaric, suberic, sebacic, dodecanedioic, 1,2- or 1,3-cyclohexanedicarboxylic acid, 1,2- or 1,3-phenylenediacetic acid, 1,2- or 1,3-cyclohexanediacetic acid isophthalic, p-(tert-butyl)isophthalic acid, terephthalic, azelaic, pimelic, 4,4'-benzophenonedicarboxylic acid; 2,5-naphthalenedicarboxylic or 5-sulphoisophthalic acid or alkaline salt thereof, and/or mixtures thereof. The preferred diacid is adipic acid.

In a preferred embodiment, the diamine is selected from the group consisting of hexamethylenediamine, heptamethylenediamine, tetramethylenediamine, pentamethylenediamine, octamethylenediamine, nonamethylenediamine, decamethylenediamine, 2-methylpentamethylenediamine, undecamethylenediamine, dodecamethylenediamine, xylylenediamine or isophoronediamine ; 2-methylhexamethylenediamine; 3-methylhexamethylenediamine; 2,5-dimethylhexamethylenediamine; 2,2-dimethylpentamethylenediamine; 5-methylnonanediamine; 2,2,4- and 2,4,4-trimethylhexamethylenediamine; 2,2,7,7-tetramethyloctamethylenediamine; meta-xylylenediamine; para-xylylenediamine; diaminodicyclo-hexylmethane and C2-C16 aliphatic diamines which can be substituted by one or more alkyl groups, and/or mixtures thereof. The preferred diamine is hexamethylenediamine.

Most preferably, the salt of a diacid and diamine is an adipic acid hexamethylendiamine salt.

### Polyamides A and B

The viscosity numbers of the polyamides A and B are generally not critical, as long as the polyamide B has a lower viscosity number than the polyamide A.

The viscosity number of polyamide A is preferably from 120 to 250 cm³/g, more preferably from 150 to 220 cm³/g, most preferably 170 to 210 cm³/g.

The viscosity number of polyamide B as well as the viscosity number of polyamide B1 is preferably from 80 to 200 cm³/g, more preferably from 100 to 180 cm³/g, most preferably 120 to 160 cm³/g. The term "polyamides" generally includes homopolyamides as well as copolyamides.

Preference is given to semicrystalline or amorphous polyamides or mixtures thereof.

Examples of these are polyamides that derive from lactams having from 7 to 13 ring members, e.g. polycaprolactam, polycaprylolactam, and polylaurolactam, like PA 6, PA 12.

Further examples are polyamides obtained via reaction of dicarboxylic acids with diamines.

Particularly suitable dicarboxylic acids are alkanedicarboxylic acids having from 6 to 12, in particular from 6 to 10 carbon atoms, and aromatic dicarboxylic acids. Merely as examples, those that may be mentioned here are adipic acid, azelaic acid, sebacic acid, dodecanedioic acid and terephthalic and/or isophthalic acid.

Particularly suitable diamines are alkanediamines having from 6 to 12, in particular from 6 to 8 carbon atoms, and also m-xylylenediamine, di(4-aminophenyl)methane, di(4-aminocyclohexyl)methane, 2,2-di(4-aminophenyl)propane, 2,2-di(4-aminocyclohexyl)propane, and 1,5-diami-no-2-methylpentane.

Suitable polyamides are polyhexamethyleneadipamide, polyhexamethylenesebacamide, and polycaprolactam, and also PA 6/66 copolyamides, in particular having a proportion of from 5 to 95 wt% of caprolactam units (e.g. Ultramid^{®} C31 from BASF SE).

Other suitable polyamides are obtainable from ω-aminoalkylnitriles e.g. aminocapronitrile (PA 6) and adipodinitrile with hexamethylenediamine (PA 66) via what is known as direct polymerization in the presence of water, for example as described in DE-A 10313681, EP-A 1198491 and EP 922065.

Mention may also be made of polyamides obtainable, by way of example, via condensation of 1,4-diaminobutane with adipic acid at an elevated temperature (PA 46) or via condensation of hexamethylenediamine with sebacic acid (PA 610). Preparation processes for polyamides of this structure are described by way of example in EP-A 38 094, EP-A 38 582, and EP-A 39 524.

Other suitable examples are polyamides obtainable via copolymerization of two or more of the abovementioned monomers, and mixtures of two or more polyamides in any desired mixing ratio. Particular preference is given to mixtures of PA 66 with other polyamides, in particular blends of PA 6 and PA 66, and to PA 6/66 copolyamides and PA 66/6 copolyamides.

Other copolyamides which have proven particularly advantageous are semiaromatic copolyamides, such as PA 6/6T, PA 6T/6, PA 6T/66 and PA 66/6T, where the triamine content of these is preferably less than 0.5 wt%, preferably less than 0.3 wt% (see EP-A 299 444). Other polyamides resistant to high temperatures are known from EP-A 19 94 075 (PA 6T/6I/MXD6).

The processes described in EP-A 129 195 and 129 196 can be used to prepare the preferred semiaromatic copolyamides with low triamine content.

Other polyamides which have proven advantageous are aromatic polyamides, such as PA 9T, PA 10T, PA 4T and the copolyamides PA 6I/6T, PA 6T/6I.

Suitable copolyamides are constructed from:
A1) 20.0 to 90.0 wt% of units derived from terephthalic acid and hexamethylenediamine,
A2) 0 to 50.0 wt% of units derived from ε-caprolactam,
A3) 0 to 80.0 wt% of units derived from adipic acid and hexamethylenediamine,
A4) 0 to 40.0 wt% of further polyamide-forming monomers,
wherein the proportion of component A2) or A3) or A4), or mixtures thereof is at least 10.0 wt%.

Component A1) comprises 20.0 to 90.0 wt% of units derived from terephthalic acid and hexamethylenediamine.

In addition to the units derived from terephthalic acid and hexamethylenediamine, the copolyamides optionally comprise units derived from ε-caprolactam and/or units derived from adipic acid and hexamethylenediamine and/or units derived from further polyamide-forming monomers.

Aromatic dicarboxylic acids A4) comprise 8 to 16 carbon atoms. Suitable aromatic dicarboxylic acids include, for example, isophthalic acid, substituted terephthalic and isophthalic acids, such as 3-t-butylisophthalic acid, polycyclic dicarboxylic acids, for example 4,4'- and 3,3'-diphenyldicarboxylic acid, 4,4'- and 3,3'-diphenylmethanedicarboxylic acid, 4,4'- and 3,3'-sulfodiphenylcar-boxylic acid, 1,4- or 2,6-naphthalenedicarboxylic acid, phenoxyterephthalic acid, isophthalic acid being particularly preferred.

Further polyamide-forming monomers A4) may be derived from dicarboxylic acids having 4 to 16 carbon atoms and aliphatic or cycloaliphatic diamines having 4 to 16 carbon atoms, and also from aminocarboxylic acids/corresponding lactams having 7 to 12 carbon atoms. Examples of suitable monomers of these types mention are suberic acid, azelaic acid and sebacic acid as representatives of aliphatic dicarboxylic acids, 1,4-butanediamine, 1,5-pentanediamine, piperazine, 4,4'-diaminodicyclohexylmethane, 2,2-(4,4'-diaminodicyclohexyl)propane and 3,3'-dimethyl-4,4'-diaminodicyclohexylmethane or meta-xylylenediamine as representatives of diamines and caprolactam, enantholactam, ω-aminoundecanoic acid and laurolactam as representatives of lactams/aminocarboxylic acids.

Suitable such copolyamides are more particularly elucidated in DE-A-10 2009 011 668

The following list, which is not comprehensive, comprises the polyamides mentioned above and other suitable polyamides for the purposes of the invention, and the monomers comprised:

### AB polymers:

- PA 4: Pyrrolidone
- PA 6: ε-Caprolactam
- PA 7: Ethanolactam
- PA 8: Caprylolactam
- PA 9: 9-Aminopelargonic acid
- PA 11: 11-Aminoundecanoic acid
- PA 12: Laurolactam

### AA/BB polymers:

- PA 46: Tetramethylenediamine, adipic acid
- PA 66: Hexamethylenediamine, adipic acid
- PA 69: Hexamethylenediamine, azelaic acid
- PA 610: Hexamethylenediamine, sebacic acid
- PA 612: Hexamethylenediamine, decanedicarboxylic acid
- PA 613: Hexamethylenediamine, undecanedicarboxylic acid
- PA 1212: 1,12-Dodecanediamine, decanedicarboxylic acid
- PA 1313: 1,13-Diaminotridecane, undecanedicarboxylic acid
- PA 4T: Tetramethylenediamine, terephthalic acid
- PA 6T: Hexamethylenediamine, terephthalic acid
- PA 9T: 1,9-Nonanediamine, terephthalic acid
- PA 10T: 1,10-Decandiamine, terephthalic acid
- PA MXD6: m-Xylylenediamine, adipic acid

### AA/BB polymers:

- PA 6I: Hexamethylenediamine, isophthalic acid
- PA 6-3-T: Trimethylhexamethylenediamine, terephthalic acid
- PA 6/6T: (see PA 6 and PA 6T)
- PA 6T/6: (see PA 6T and PA 6)
- PA 6T/66: (see PA 6T and PA 66)
- PA 66/6T: (see PA 66 and PA 6T)
- PA 6/66: (see PA 6 and PA 66)
- PA 66/6: (see PA 66 and PA 6)
- PA 6/12: (see PA 6 and PA 12)
- PA 66/6/610: (see PA 66, PA 6 and PA 610)
- PA 6T/6I/66: (see PA 6T, PA 6I and PA 66)
- PA 61/6T: (see PA 6I and PA 6T)
- PA 6T/6I: (see PA 6I and PA 6T)
- PA PACM 12: Diaminodicyclohexylmethane, laurolactam
- PA 61/6T/PACM: as PA 61/6T + diaminodicyclohexylmethane
- PA 12/MACMI: Laurolactam, dimethyldiaminodicyclohexylmethane, isophthalic acid
- PA 12/MACMT: Laurolactam, dimethyldiaminodicyclohexylmethane, terephthalic acid
- PA PDA-T: Phenylenediamine, terephthalic acid

Preferred polyamides A and also polyamides B are PA 6, PA 66, PA 6/66, PA 66/6, PA 12, PA 610, PA 46, PA 6T/6, PA 6T/66, PA 9T, PA 10T, PA 6I/6T, PA 6T/6I, PA 6T/61/66, PA 66/6T and PA 4T, more preferably PA 6, PA 66, PA 6/66 or PA 66/6 and mixtures thereof.

Polyamide A is preferably a polyamide comprising polyamides from post industrial (= pre consumer) and/or post consumer waste, preferably from extrusion processes selected from the group of blow molding, film extrusion, tube extrusion, sheet extrusion, fiber spinning and mixtures thereof.

Preferred polymers A comprise sorted polyamide waste, i.e. comprising only polyamides as polymeric components. Said polyamides may be mixtures of 2 or more different polyamides or one polyamide. Suitable polyamides are mentioned above.

The preferred polyamide A comprising polyamides from post industrial (= pre consumer) and/or post consumer waste, preferably from extrusion processes selected from the group of blow molding, film extrusion, tube extrusion, sheet extrusion, fiber spinning and mixtures thereof, may in one embodiment employed in the method of the present invention in combination with one or more residual filler materials and/or one or more residual additives present in the post industrial (= pre consumer) and/or post consumer waste. The fillers and additives depend on the kind of post industrial (= pre consumer) and/or post consumer waste and are known by a person skilled in the art.

One advantage of the inventive method is that residual fillers and additives do not interfere with the method of present invention.

However, the polyamide A employed in the present invention is preferably employed in the absence of significant amounts of residual filler materials and/or additives (i.e. preferably, not more than 5 wt% of residual filler materials and not more than 1 wt% of residual additives, based on the polyamide A, are present), more preferably, the polyamide A is employed in the present method in the absence of residual filler materials and/or additives.

In one embodiment polyamide A is a polyamide consisting of 100% polyamides from post industrial and/or post consumer waste, preferably from extrusion processes selected from the group of blow molding, film extrusion, tube extrusion, sheet extrusion, fiber spinning and mixtures thereof (Aa) or a mixture of
- Aa: polyamides from post industrial and/or post consumer waste, preferably from extrusion processes selected from the group of blow molding, film extrusion, tube extrusion, sheet extrusion, fiber spinning and mixtures thereof (Aa), and
- Ab: virgin polyamide (Ab).

Preferably, the polyamide A therefore comprises
- Aa: 50 to 100 wt%, preferably 80 to 100 wt%, more preferably 90 to 100 wt% of post industrial and/or post consumer waste, preferably from extrusion processes selected from the group of blow molding, film extrusion, tube extrusion, sheet extrusion, fiber spinning and mixtures thereof (Aa), and
- Ab: 0 to 50 %, preferably 0 to 20 wt%, more preferably 0 to 10 wt% of virgin polyamide (Ab),
wherein the sum of the amounts of (Aa) and (Ab) is 100 wt%.

More preferably, the polyamide A comprises
- Aa: 100 wt % of post industrial and/or post consumer waste, preferably from extrusion processes selected from the group of blow molding, film extrusion, tube extrusion, sheet extrusion, fiber spinning and mixtures thereof (Aa).

The polyamides A mentioned above are suitable as polyamides Aa and Ab.

The present invention makes it possible to provide injection molding PA (polyamide B) using 100% recycled extrusion grade PA (polyamide A).

In the meaning of the present application "waste" means any substance or object which holder discards or intends or is required to discard (EU law definition).

Pre-consumer (= post industrial) waste originates in the meaning of the present application from the production of a product, post-consumer waste originates from its use.

"Recycling" means any recovery operation by which waste materials are reprocessed into products, materials or substances whether for the original or other purposes. It includes the reprocessing of organic material but does not include energy recovery and the reprocessing into materials that are to be used as fuels or for backfilling operations (Art. 3(17) of the Waste Framework Directive (WFD)).

The post industrial (= pre consumer) and/or post consumer waste polyamide for the method of the present invention is preferably originated from extrusion industry, especially the production of fibers, sheets, films, pipes and profiles by extrusion.

According to the present application, it is one object of the present invention to recycle polyamides A, especially post-industrial and/or post consumer polyamide waste originating from extrusion industry, to provide a recycled polyamide B with good flowability and sufficient melt stability for injection molding applications.

Polyamide B comprises therefore the same class of polyamides as polyamide A, but having a lower viscosity than polyamide A. Suitable classes of polyamides are mentioned above.

However, the polyamide from post-industrial and/or post consumer waste originating from extrusion industry which is preferably comprised in polyamide A has a viscosity which is too high to be reused injection molding applications. Reuse of such materials for injection molding application necessitates a reduction of melt viscosity of the recycled material.

The present invention therefore provides a method for reducing the viscosity of polyamide A, whereby the ratio of the concentration of end-groups (amino groups and carboxylic acid groups) of the starting polyamide A is preferably kept constant (with a deviation of about +/- 20%, preferably about +/- 10%). As a result the melt stability of the recycled polyamide B is insured (MVR over time), prerequisite for an application of the recycled polymer, especially in injection molding, preferably at a low concentration of additives.

The method of the present invention for manufacturing a polyamide B comprises melt-mixing a polyamide A and a salt of a diacid and a diamine. Suitable polyamides A and B and suitable salts C of a diacid and a diamine as well as suitable amounts of the salt of the diacid and diamine are mentioned above.

In the method of the present invention, the melt-mixing of the polyamide A and a salt of a diacid and a diamine is optionally carried out in the presence of a filler material (D) and/or at least one further additive (E). In the case that a filler material (D) and/or at least one further additive (E) are present, polymer compositions for injection molding comprising the recycled polymer B are directly obtained by the inventive method without further processing steps. Suitable filler materials (D) and further additives (E) are mentioned below.

In said embodiment, the polyamide A is preferably fed in an extruder and compounded optionally with at least one further additive (E) and/or a filler material (D) to produce polyamide grade for injection molding. The inventive addition of a salt of a diacid and a diamine in the first stage of the extrusion leads to a fast, homogeneous reduction of molecular weight of recycled materials via transamidation. Only a low amount of the salt of a diacid and a diamine (typically less than or equal to 1%, preferably 0.01 to 1 % by weight, more preferably 0.1 to 0.9 % by weight, most preferably 0.15 % by weight to 0.5 % by weight) is necessary to efficiently reduce the viscosity of polyamide A.

The melt-mixing is preferably carried out in an extruder. The extruder may be a single-, twin or multiple-screw extruder. Twin-screw extruders are preferred. Twin-screw extruders are also known as double screw extruders. The twin-screw extruders may be corotating or counterrotating. Single-screw extruders, twin-screw extruders and multiple-screw extruders are known to the skilled person and are for example described in C. Rauwendaal: Polymer extrusion, Carl Hanser Verlag GmbH & Co. KG, 5thedition (16 January 2014), page 13-47.

The extruder may comprise further devices, for example mixing elements or kneading elements. Mixing elements serve for the mixing of the individual components comprised in the extruder. Suitable mixing elements are known to the skilled person and are, by way of example, static mixing elements or dynamic mixing elements. Kneading elements likewise serve for the mixing of the individual components comprised in the extruder. Suitable kneading elements are known to the person skilled in the art and are, by way of example, kneading screws or kneading blocks, for example disk kneading blocks or shoulder kneading blocks.

The extruder is operated continuously or discontinuously, i.e. the method according to the present invention is a continuous or discontinuous method.

In the melt-mixing method of the present invention, the temperature of the extruder during melt-mixing can be any temperature and is usually in the range from 200 to 380°C, preferably in the range from 220 to 350°C and particularly preferably in the range from 240 to 340°C.

The barrel temperature of the extruder can be higher than the temperature of the components in the extruder, and it is equally possible that the barrel temperature of the extruder is lower than the temperature of the components in the extruder. By way of example, it is possible that the barrel temperature of the extruder is initially higher than the temperature of the components in the extruder when the components are being heated. When the components in the extruder are being cooled, it is possible that the barrel temperature of the extruder is lower than the temperature of the components in the extruder. The temperatures given in the present invention and referring to the extruder are meant to be barrel temperatures of the extruder. "Barrel temperature of the extruder" means the temperature of the barrel of the extruder. The barrel temperature of the extruder is therefore the temperature of the external wall of the extruder barrel. As extruder, any extruder known to the skilled person is suitable which can be used at the temperatures and pressures during the compounding. In general, the extruder can be heated to at least the temperature, at which the polyamide A, the salt of a diacid and a diamine and optionally at least one further additive (E) and/or filler material (D) are compounded.

The polyamide A and the salt of a diacid and a diamine and optionally at least one further additive (E) and/or filler material (D) can be added to the extruder in succession or concurrently and are mixed and compounded in the extruder to obtain the polyamide B or the polyamide composition described below. In one preferred embodiment, the salt C of a diacid and a diamine is added in a first step to the polyamide A. In a second step, optionally at least one further additive (E) and/or filler material (D) is added. The diacid and the diamine of the salt C are added to the extruder in form of a salt C or, alternatively, the diacid and the diamine are added separately, and the salt C is formed in the extruder.

In the method according to the present invention, a polyamide A is melt-mixed with a salt of a diacid and a diamine. By said method, a polyamide B is obtained having a lower viscosity number than polyamide A. Strictly speaking, since the salt C of a diacid and a diamine is present together with polyamide A in the method of the present invention, a polyamide B is formed, comprising the same units selected from one or more diamines in combination with one or more diacids, one or more lactams and mixtures thereof, as polyamide A and in addition units derived from a diacid and a diamine forming a salt C. In case that the polyamide A comprises units based on the same diacids and diamines as the diacids and diamines present in the salt C, said units cannot be distinguished, this is - for example - the case of polyamide 66 as polyamide A and a salt C of adipic acid and hexamethylenediamine. However, in the case that the units in polymer B derived from the diacid and the diamine forming the salt C are different from the units forming the polyamide A, a polymer B1 is obtained comprising a small amount of units derived from the diacid and the diamine forming the salt C in addition to the units already present in polymer A. Since the viscosity of the polymer formed from the same units already present in polymer A is different from the viscosity of polymer A, i.e. a polymer different from polymer A is formed, said polymer is named polymer B* in the following.

The present invention therefore further relates to a polyamide B1 constructed from
a) 99.00 to 99,99 % by weight, preferably 99.10 to 99.90 % by weight, more preferably 99.50 to 99.85 % of polyamide B* formed from units selected from one or more diamines in combination with one or more diacids, one or more lactams and mixtures thereof, and
b) 0.01 to 1 % by weight, preferably 0.1 to 0.9 % by weight, more preferably 0.15 to 0.5 % by weight of units derived from a diacid and a diamine forming a salt C,
   wherein the units derived from the diacid and the diamine forming the salt C are different from the units forming the polyamide B*.

Preferred salts C are mentioned above. More preferably, the diacid and the diamine forming the salt C are adipic acid and hexamethylendiamine.

Polyamide B* comprises the same units selected from one or more diamines in combination with one or more diacids, one or more lactams and mixtures thereof, as polyamide A. Suitable units selected from one or more diamines in combination with one or more diacids, one or more lactams and mixtures thereof forming polyamide A and therefore also polyamide B* are mentioned above.

The ratio of the concentration of amino end groups of polyamide B1 to the concentration of carboxyl end groups of polyamide B is preferably ≥ 0.2, more preferably ≥ 0.40, most preferably ≥ 0.70.

Polyamide B1 is a subgroup of polyamide B. The only difference between polyamide B and polyamide B1 is that the units derived from the diacid and the diamine forming the salt C are different from the units derived from polyamide A (which units correspond to the units forming the polyamide B*).

I.e. the polyamide B is constructed from
a) 99.00 to 99,99 % by weight, preferably 99.10 to 99.90 % by weight, more preferably 99.50 to 99.85 % of polyamide B* formed from units selected from one or more diamines in combination with one or more diacids, one or more lactams and mixtures thereof, and
b) 0.01 to 1 % by weight, preferably 0.1 to 0.9 % by weight, more preferably 0.15 to 0.5 % by weight of units derived from a diacid and a diamine forming a salt C.

The present invention therefore further relates to a polyamide B1 constructed from
a) 99.00 to 99,99 % by weight, preferably 99.10 to 99.90 % by weight, more preferably 99.50 to 99.85 % by weight of PA 6, and
b) 0.01 to 1 % by weight, preferably 0.1 to 0.9 % by weight, more preferably 0.15 to 0.5 % by weight of units derived from a salt C of adipic acid and hexamethylendiamine.

Herein, it is also disclosed a polyamide B obtained by the method according to the present invention, wherein the ratio of the concentration of amino end groups of polyamide B to the concentration of carboxyl end groups of polyamide B is preferably ≥ 0.2, more preferably ≥ 0.40, most preferably ≥ 0.70.

The determination of the concentration of amino end groups and of the concentration of carboxyl end groups is described above. Further, suitable polyamides B are described above.

The microstructure of polyamide B1 is different from the microstructure of polyamides obtained by a polymerization process, wherein polyamide forming monomers, e.g. caprolactam monomers, are polymerized in the presence of a salt of a diacid and a diamine, e.g. an equimolar salt of hexamethylene diamine and adipic acid, as for example disclosed in JP 2001 200054 A, JP H09 234789 A and WO 2018/165641 A1.

As mentioned in WO 2018/165641 A1, a polyamide 6/66 copolymer formed from substantially randomly distributed caprolactam monomers and hexamethylene diamine monomers is formed when caprolactam monomers are polymerized in the presence of an equimolar salt of hexamethylene diamine and adipic acid (see for example paragraph [0026] in WO 2018/165641 A1).

However, the polyamide B1 according to the present invention is constructed from a polyamide B* (which may be in a most preferred embodiment polyamide 6) and 0.01 to 1 wt.% of units derived from a diacid and a diamine forming salt C, which is preferably the salt of adipic acid and hexamethylene diamine. Said polyamide B1 does therefore not form a polyamide 6/66 copolymer, wherein a caprolactam based unit and the hexamethylene diamine based unit are randomly distributed.

Without being bound to a theory, it can be expected that in the process of the present invention first a kind of dimer or oligomer is formed from the salt C, which is then incorporated into the polymer chain B* by exchange reactions with the polymer B*. In the polyamide B1, the monomer units forming the polymer B* and the monomer units based on the salt C are not randomly distributed, but the polyamide B1 comprises end groups formed by the salt C and blocks formed by a dimer or oligomers formed from the salt C.

The microstructure of the polyamide B1 is therefore different from the microstructure of the polyamides disclosed for example in JP 2001 200054 A, JP H09 234789 A and WO 2018/165641 A1.

The present invention further relates to a polyamide composition comprising:
(i) a polyamide B1 according to the present invention; and
(ii) optionally a filler material (D) and
(iii) optionally at least one further additive (E),
wherein at least either one filler material (D) or one further additive is present.

Preferably, the polyamide composition comprises
(i) 40 to 99.9 wt%, preferably 50 to 99.75 wt%, more preferably 60 to 99.5 wt% of a polyamide B1 according to the present invention; and
(ii) contains 0 to 60 wt%, preferably 0 to 50 wt%, more preferably 0 to 40 wt% of a filler material (D) and
(iii) 0 to 25 wt%, preferably 0 to 20 wt%, more preferably 0 to 15 wt% of at least one further additive (E),

wherein at least either one filler material (D) or one further additive (E) is present,
wherein
in the case that a filler material (D) is employed, the minimum amount is preferably 10 wt%, more preferably 15 wt%, most preferably 20 wt%; and
in the case that further additives (E) are employed, the minimum amount is preferably 0.1 wt%, more preferably 0.25 wt%, most preferably 0.5 wt%,
wherein the total amount of components B1, D and E is 100 wt%.

The polyamide B1 is described above.

The filler material (D) may comprise one or more of the fillers mentioned below.

As component D, the polyamide composition contains 0 to 60 wt%, preferably 0 to 50 wt%, more preferably 0 to 40 wt% of at least one filler material, which is generally a fibrous and/or particulate filler.

Preferably, component D comprises glass fibers and is present in an amount of from 10 to 60 wt%, more preferably 15 to 50 wt%, most preferably 20 to 40 wt%.

If component D is present, the maximum amount of the polyamide B1 is decreased by the minimum amount of component D, so that the total amount of components B1 , D and E is still 100 wt%.

Fibrous or particulate fillers D that may be mentioned are carbon fibers, glass fibers, glass beads, amorphous silica, calcium silicate, calcium metasilicate, magnesium carbonate, kaolin, chalk, powdered quartz, mica, barium sulfate, and feldspar.

Preferred fibrous fillers that may be mentioned are carbon fibers, aramid fibers, and potassium titanate fibers, particular preference being given to glass fibers in the form of E glass. These can be used as rovings or in the commercially available forms of chopped glass.

The fibrous fillers may have been surface-pretreated with a silane compound to improve compatibility with the thermoplastic.

Suitable silane compounds have the general formula:

(X-(CH₂)ₙ)ₖ-Si-(O-CₘH₂ₘ₊₁)₄₋ₖ

where the definitions of the substituents are as follows: 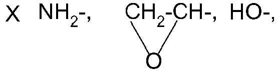
- n: is a whole number from 2 to 10, preferably 3 to 4,
- m: is a whole number from 1 to 5, preferably 1 to 2, and
- k: is a whole number from 1 to 3, preferably 1.

Preferred silane compounds are aminopropyltrimethoxysilane, aminobutyltrimethoxysilane, aminopropyltriethoxysilane and aminobutyltriethoxysilane, and also the corresponding silanes which comprise a glycidyl group as substituent X.

The amounts of the silane compounds generally used for surface-coating are from 0.01 to 2 wt%, preferably from 0.025 to 1.0 wt% and in particular from 0.05 to 0.5 wt% (based on component D).

Acicular mineral fillers are also suitable.

For the purposes of the invention, acicular mineral fillers are mineral fillers with strongly developed acicular character. An example is acicular wollastonite. The mineral preferably has an L/D (length to diameter) ratio of from 8:1 to 35:1, preferably from 8:1 to 11:1. The mineral filler may optionally have been pretreated with the abovementioned silane compounds, but the pretreatment is not essential.

Other fillers which may be mentioned are kaolin, calcined kaolin, wollastonite, talc and chalk, and also lamellar or acicular nanofillers, the amounts of these preferably being from 0.1 to 10%.

Materials preferred for this purpose are boehmite, bentonite, montmorillonite, vermiculite, hectorite, and laponite. The lamellar nanofillers are organically modified by prior art methods, to give them good compatibility with the organic binder. Addition of the lamellar or acicular nanofillers to the inventive nanocomposites gives a further increase in mechanical strength.

As component E, the polyamide compositions of the present invention can contain 0 to 25 wt%, preferably 0 to 20 wt%, more preferably 0 to 15 wt% of at least one further additive. If component E is present, the maximum amount of the polyamide B1 is decreased by the minimum amount of component E, so that the total amount of components B1 , D and E is still 100 wt%.

If at least one further additive is employed, the minimum amount is preferably 0.1 wt%, more preferably 0.25 wt%, most preferably 0.5 wt%.

The polyamide compositions of the invention can comprise as component E conventional processing aids, further stabilizers, oxidation retarders, agents to counteract decomposition by heat and decomposition by ultraviolet light, lubricants and mold-release agents, colorants, such as dyes and pigments, nucleating agents, plasticizers, etc.

The polyamide compositions of the invention can comprise, as component E1, from 0.05 to 3% by weight, preferably from 0.1 to 1.5% by weight, and in particular from 0.1 to 1% by weight, of a lubricant.

Preference is given to the salts of Al, of alkali metals, or of alkaline earth metals, or esters or amides of fatty acids having from 10 to 44 carbon atoms, preferably having from 12 to 44 carbon atoms.

The metal ions are preferably alkaline earth metal and Al, particular preference being given to Ca or Mg.

Preferred metal salts are Ca stearate and Ca montanate, and also Al stearate.

It is also possible to use a mixture of various salts, in any desired mixing ratio.

The carboxylic acids can be monobasic or dibasic. Examples which may be mentioned are pe-largonic acid, palmitic acid, lauric acid, margaric acid, dodecanedioic acid, behenic acid, and particularly preferably stearic acid, capric acid, and also montanic acid (a mixture of fatty acids having from 30 to 40 carbon atoms).

The aliphatic alcohols can be monohydric to tetrahydric. Examples of alcohols are n-butanol, n-octanol, stearyl alcohol, ethylene glycol, propylene glycol, neopentyl glycol, pentaerythritol, preference being given to glycerol and pentaerythritol.

The aliphatic amines can be mono- to tribasic. Examples of these are stearylamine, ethylenediamine, propylenediamine, hexamethylenediamine, di(6-aminohexyl)amine, particular preference being given to ethylenediamine and hexamethylenediamine. Preferred esters or amides are correspondingly glycerol distearate, glycerol tristearate, ethylenediamine distearate, glycerol monopalmitate, glycerol trilaurate, glycerol monobehenate, and pentaerythritol tetrastearate.

It is also possible to use a mixture of various esters or amides, or of esters with amides in combination, in any desired mixing ratio.

As component E the polyamide composition according to the invention can comprise preferably 0.01% to 3% by weight, particularly preferably 0.02% to 2% by weight, in particular 0.05% to 1.0% by weight, of at least one heat stabilizer based on the total weight of the composition.

The heat stabilizers are preferably selected from copper compounds, secondary aromatic amines, sterically hindered phenols, phosphites, phosphonites and mixtures thereof.

As component E, 0.05 to 3 wt%, preferably 0.1 to 2 wt%, in particular 0.1 to 1 wt% of at least one sterically hindered phenol antioxidant can be employed.

This component E preferably has a molecular weight of more than 500 g/mol, more preferably of more than 1000 g/mol. Additionally, component C should preferably exhibit a high thermal stability, e.g. maximum of 5% weight loss, more preferably maximum of 2% weight loss, measured under nitrogen at 300 °C within a TGA (thermogravimetric analysis) experiment (40 °C to 120 °C with 10 °C/min, isothermal the later temperature for 15 min followed by 120 °C to 600 °C at 20 °C/min).

Component E has preferably at least one, more preferably at least two phenol groups substituted by at least one branched C₃₋₁₂-alkyl group as sterically hindering group. The substituted phenol groups are covalently linked with the structure of component E.

Suitable sterically hindered phenols E are in principle all of the compounds which have a phenolic structure and which have at least one bulky group on the phenolic ring. A bulky group is for example a branched C₃₋₁₂-alkyl group, preferably a branched C₃₋₆-alkyl group, more preferably an isopropyl or tert.-butyl group.

It is preferable to use, for example, compounds of the formula 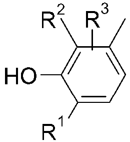 where:
R¹ and R² are an alkyl group, a substituted alkyl group, or a substituted triazole group, and where the radicals R¹ and R² may be identical or different, and R³ is an alkyl group, a substituted alkyl group, an alkoxy group, or a substituted amino group. The alkyl and alkoxy residues have preferably 1 to 12 carbon atoms, more preferably 1 to 6 carbon atoms.

Substituents are preferably C₁₋₁₂-alkyl, more preferably C₁₋₆-alkyl, most preferably C₁₋₄-alkyl. At least one of R¹ to R³ is preferably a bulky group as defined above.

Antioxidants of the abovementioned type are described by way of example in DE-A 27 02 661 (US-A 4 360 617).

Another group of preferred sterically hindered phenols is provided by those derived from substituted phenylcarboxylic acids, in particular from substituted phenylpropionic acids, which preferably have at least one bulky group on the phenyl group. They contain at least one, preferably two covalently linked substituted phenylcarboxylic acid unit(s) in their structure, which preferably have at least one bulky group on the phenyl group.

Preferred phenylcarboxylic acids are phenyl-C₁₋₁₂-carboxylic acids, more preferably phenyl-C₂₋₆-carboxylic acids. The phenyl group is preferably a phenol group having at least one bulky group on the phenolic ring, as indicated above. Thus, the above-mentioned sterically hindered phenols are preferably covalently linked with a C₁₋₁₂-alkane carboxylic acid, more preferably a linear C₂₋₆-alkane carboxylic acid.

Particularly preferred compounds from this class are compounds of the formula 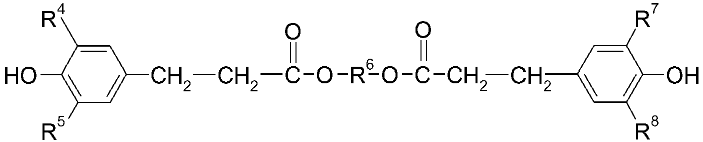 where R⁴, R⁵, R⁷, and R⁸, independently of one another, are C₁-C₈-alkyl groups which themselves may have substitution (at least one of these being a bulky group), and R⁶ is a divalent aliphatic radical which has from 1 to 10 carbon atoms and whose main chain may also have C-O bonds. At least one of R⁴ to R⁸ is a bulky group as defined above.

Preferred compounds corresponding to these formulae are 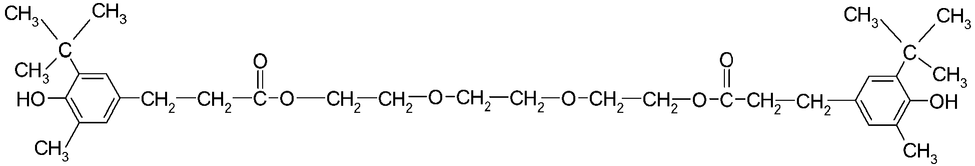 (Irganox^{®} 245 from BASF SE) 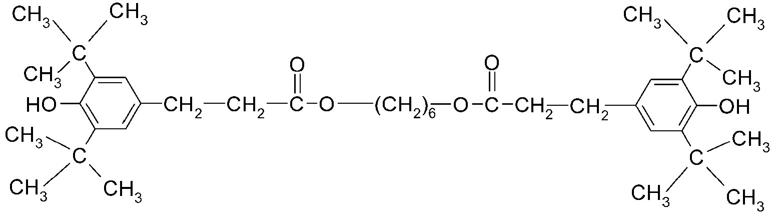 (Irganox^{®} 259 from BASF SE)

All of the following should be mentioned as examples of sterically hindered phenols:
2,2'-methylenebis(4-methyl-6-tert-butylphenol), 1,6-hexanediol bis[3-(3,5-di-tert-butyl-4-hydroxyphenyl)propionate], pentaerythrityl tetrakis[3-(3,5-di-tert-butyl-4-hydroxyphenyl)propionate] (Irganox^{®} 1010 from BASF SE), distearyl 3,5-di-tert-butyl-4-hydroxybenzylphosphonate, 2,6,7-trioxa-1-phosphabicyclo[2.2.2]oct-4-ylmethyl 3,5-di-tert-butyl-4-hydroxyhydrocinnamate, 3,5-di-tert-butyl-4-hydroxyphenyl-3,5-distearylthiotriazylamine, 2-(2'-hydroxy-3'-hydroxy-3',5'-di-tert-butylphenyl)-5-chlorobenzotriazole, 2,6-di-tert-butyl-4-hydroxymethylphenol, 1,3,5-trimethyl-2,4,6-tris(3,5-di-tert-butyl-4-hydroxybenzyl)benzene, 4,4'-methylenebis(2,6-di-tert-butylphenol), 3,5-di-tert-butyl-4-hydroxybenzyldimethylamine.

Compounds which have proven particularly effective and which are therefore used with preference are 2,2'-methylenebis(4-methyl-6-tert-butylphenol), 1,6-hexanediol bis(3,5-di-tert-butyl-4-hydroxyphenyl)propionate (Irganox^{®} 259), pentaerythrityl tetrakis[3-(3,5-di-tert-butyl-4-hydroxyphenyl)propionate], and also N,N'-hexamethylenebis-3,5-di-tert-butyl-4-hydroxyhydrocinnamide (Irganox^{®} 1098), and the products Irganox^{®} 245 and Irganox^{®} 1010 described above from BASF SE, which have particularly good suitability.

In some instances, sterically hindered phenols having not more than one sterically hindered group in ortho-position with respect to the phenolic hydroxy group have proven particularly advantageous; in particular when assessing colorfastness on storage in diffuse light over prolonged periods.

Furthermore, it is advantageous to employ sterically hindered phenol antioxidants which also have a sufficiently high molecular weight, preferably of more than 500 g/mol and especially a molecular weight above 1000 g/mol. Furthermore, they preferably exhibit a high thermal stability measured by TGA (thermogravimetric analysis) of less than 2% degradation up until 300 °C under nitrogen atmosphere.

The polyamide composition of the invention can comprise, as component E2, from 0.05 to 3% by weight, preferably from 0.1 to 1.5% by weight, and in particular from 0.1 to 1% by weight, of a copper stabilizer, preferably of a Cu(I) halide, in particular in a mixture with an alkali metal halide, preferably KI, in particular in the ratio 1:4, or of a sterically hindered phenol, or a mixture of these.

Preferred salts of monovalent copper used are cuprous acetate, cuprous chloride, cuprous bromide, and cuprous iodide. The materials comprise these in amounts of from 5 to 500 ppm of copper, preferably from 10 to 250 ppm, based on polyamide.

The advantageous properties are in particular obtained if the copper is present with molecular distribution in the polyamide. This is achieved if a concentrate comprising the polyamide, and comprising a salt of monovalent copper, and comprising an alkali metal halide in the form of a solid, homogeneous solution is added to the molding composition. By way of example, a typical concentrate is composed of from 79 to 95% by weight of polyamide and from 21 to 5% by weight of a mixture composed of copper iodide or copper bromide and potassium iodide. The copper concentration in the solid homogeneous solution is preferably from 0.3 to 3% by weight, in particular from 0.5 to 2% by weight, based on the total weight of the solution, and the molar ratio of cuprous iodide to potassium iodide is from 1 to 11.5, preferably from 1 to 5.

Suitable polyamides for the concentrate are homopolyamides and copolyamides, in particular PA 6.

According to a preferred embodiment of the present invention, the molding compositions are free from copper, specifically from copper stabilizers, such as Cu/(I)halides, and combinations of Cu(I)halides with alkali metal halides.

More preferably, the thermoplastic molding compositions of the present inventions are metal halide-free. Metal halide-free systems, so-called electro-friendly systems, are of high interest, since electro-mobility, electrification and connectivity are an increasing trend in almost all industries.

Therefore, the polyamide composition is preferably free from metal halides, specifically Cu halides and alkali metal halides.

The polyamide composition of the invention can comprise from 0.001 to 10 wt%, preferably from 0.05 to 5 wt%, in particular from 0.1 to 2.5 wt% of iron powder having a particle size of at most 10 µm (d₅₀ value). The iron powder is preferably obtainable via thermal decomposition of pentacarbonyl iron.

Iron occurs in a number of allotropes:
1. α-Fe (ferrite) forms space-centered cubic lattices, is magnetizable, dissolves a small amount of carbon, and occurs in pure iron up to 928 °C. At 770 °C (Curie temperature) it loses its ferromagnetic properties and becomes paramagnetic; iron in the temperature range from 770 to 928 °C is also termed β-Fe. At normal temperature and at a pressure of at least 13 000 MPa, α-Fe becomes what is known as ε-Fe with a reduction of about 0.20 cm³/mol in volume, whereupon density increases from 7.85 to 9.1 (at 20 000 MPa);
2. γ-Fe (austenite) forms face-centered cubic lattices, is nonmagnetic, dissolves a large amount of carbon, and is observable only in the temperature range from 928 to 1398 °C;
3. δ-Fe, space-centered, exists at from 1398 °C to the melting point of 1539 °C.

Metallic iron is generally silver-white, density 7.874 (heavy metal), melting point 1539 °C, boiling point 2880 °C; specific heat (from 18 to 100 °C) about 0.5 g⁻¹ K⁻¹, tensile strength from 220 to 280 N/mm². The values apply to chemically pure iron.

Industrial production of iron uses smelting of iron ores, iron slags, calcined pyrites, or blast-furnace dust, and resmelting of scrap and alloys.

The iron powder of the invention is produced via thermal decomposition of iron pentacarbonyl, preferably at temperatures of from 150 °C to 350 °C. The particles thus obtainable have a preferably spherical shape, therefore being spherical or almost spherical (another term used being spherolitic).

Preferred iron powder has the particle size distribution described below; particle size distribution here is determined by means of laser scattering in very dilute aqueous suspension (e.g. using a Beckmann LS13320). The particle size (and distribution) described hereinafter can optionally be obtained via grinding and/or sieving.
dₓₓ here means that XX% of the total volume of the particles is smaller than the stated value.
d₅₀ values: at most 10 µm, preferably from 1.6 to 8 µm, in particular from 2.9 to 7.5 µm, very particularly from 3.4 to 5.2 µm
d₁₀ values: preferably from 1 to 5 µm, in particular from 1 to 3 µm, and very particularly from 1.4 to 2.7 µm
d₉₀ values: preferably from 3 to 35 µm, in particular from 3 to 12 µm, and very particularly from 6.4 to 9.2 µm.

The iron powder preferably has iron content of from 97 to 99.8 g/100 g, preferably from 97.5 to 99.6 g/100 g. Content of other metals is preferably below 1000 ppm, in particular below 100 ppm, and very particularly below 10 ppm.

Fe content is usually determined via infrared spectroscopy.

Carbon content is preferably from 0.01 to 1.2 g/100 g, preferably from 0.05 to 1.1 g/100 g, and in particular from 0.4 to 1.1 g/100 g. This carbon content in the preferred iron powders corresponds to that of powders which are not reduced using hydrogen after the thermal decomposition process.

The carbon content is usually determined by combustion of the sample in a stream of oxygen and then using IR to detect the resultant CO₂ gas (by means of a Leco CS230 or CS-mat 6250 from Juwe) by a method based on ASTM E1019.

Nitrogen content is preferably at most 1.5 g/100 g, preferably from 0.01 to 1.2 g/100 g.

Oxygen content is preferably at most 1.3 g/100 g, preferably from 0.3 to 0.65 g/100 g.

N and O are determined via heating of the specimen to about 2100 °C in a graphite furnace. The oxygen obtained from the specimen here is converted to CO and measured by way of an IR detector. The N liberated under the reaction conditions from the N-containing compounds is discharged with the carrier gas and detected and recorded by means of TCD (Thermal Conductivity Detector) (both methods based on ASTM E1019).

Tap density is preferably from 2.5 to 5 g/cm³, in particular from 2.7 to 4.4 g/cm³. This generally means the density when the powder is, for example, charged to the container and compacted by vibration. Iron powders to which further preference is given can have been surface-coated with iron phosphate, with iron phosphite, or with SiO₂.

BET surface area to DIN ISO 9277 is preferably from 0.1 to 10 m²/g, in particular from 0.1 to 5 m²/g, and preferably from 0.2 to 1 m²/g, and in particular from 0.4 to 1 m²/g.

In order to achieve particularly good dispersion of the iron particles, a masterbatch may be used, involving a polymer. Suitable polymers for this purpose are polyolefins, polyesters, or polyamides, and it is preferable here that the masterbatch polymer is the same as component A. The mass fraction of the iron in the polymer is generally from 15 to 80 wt%, preferably from 20 to 40 wt%.

UV stabilizers that may be mentioned, the amounts of which used are generally up to 2 wt%, based on the polyamide composition, are various substituted resorcinols, salicylates, benzotriazoles, and benzophenones. Nigrosine can also be employed.

Materials that can be added as colorants are inorganic pigments, such as titanium dioxide, ultramarine blue, iron oxide, and carbon black, and also organic pigments, such as phthalocyanines, quinacridones, perylenes, and also dyes, such as anthraquinones.

Materials that can be used as nucleating agents are sodium phenylphosphinate, aluminum oxide, silicon dioxide, and also preferably talc.

The polyamide composition can furthermore contain flame retardants as component E.

As component E, the polyamide composition can comprise 1.0 to 10.0 wt%, preferably 2.0 to 6.0 wt%, in particular 3.0 to 5.0 wt%, of at least one phosphazene of general formula (IX) or (X) as flame retardant.

The minimum amount of this component E (flame retardant) is at least 1.0 wt%, preferably 2.0 wt%, in particular 3.0 wt%.

The maximum amount of this component E (flame retardant) is 10.0 wt%, preferably 6.0 wt%, particularly preferably 5.0 wt%.

"Phosphazenes" is to be understood as meaning cyclic phosphazenes of general formula (IX) 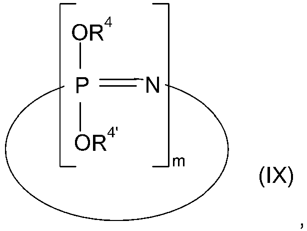 in which m is an integer from 3 to 25 and R⁴ and R^{4'} are identical or different and represent C₁-C₂₀-alkyl-, C₆-C₃₀-aryl-, C₆-C₃₀-arylalkyl- or C₆-C₃₀-alkyl-substituted aryl or linear phosphazenes of general formula (X) 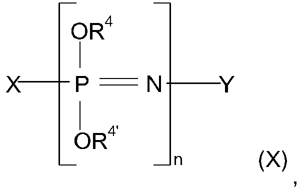 in which n represents 3 to 1000 and X represents -N = P(OPh)₃ or -N = P(O)OPh and Y represents -P(OPh)₄ or -P(O)(OPh)₂.

The production of such phosphazenes is described in EP-A 0 945 478.

Particular preference is given to cyclic phenoxyphosphazenes of formula P₃N₃C₃₆ of formula (XI) 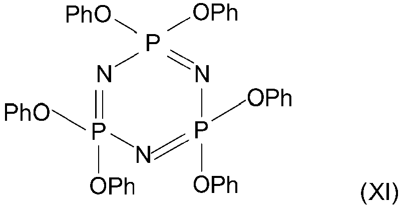 or linear phenoxyphosphazenes according to formula (XII)

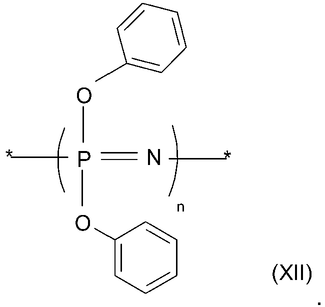

The phenyl radicals may optionally be substituted. Phosphazenes in the context of the present application are described in Mark, J. E., Allcock, H. R., West, R., Inorganic Polymers, Prentice Hall, 1992, pages 61 to 141.

Preferably employed as component E are cyclic phenoxyphosphazenes having at least three phenoxyphosphazene units. Corresponding phenoxyphosphazenes are described for example in US 2010/0261818 in paragraphs [0051] to [0053]. Reference may in particular be made to formula (I) therein. Corresponding cyclic phenoxyphosphazenes are furthermore described in EP-A-2 100 919, in particular in paragraphs [0034] to [0038] therein. Production may be effected as described in EP-A-2 100 919 in paragraph [0041]. In one embodiment of the invention the phenyl groups in the cyclic phenoxyphosphazene may be substituted by C₁₋₄-alkyl radicals. It is preferable when pure phenyl radicals are concerned.

For further description of the cyclic phosphazenes reference may be made to Römpp Chemie Lexikon, 9^{th} ed., keyword "phosphazenes". Production is effected for example via cyclophosphazene which is obtainable from PCl₅ and NH₄Cl, wherein the chlorine groups in the cyclophosphazene have been replaced by phenoxy groups by reaction with phenol.

The cyclic phenoxy phosphazene compound may for example be produced as described in Allcock, H. R., Phosphorus-Nitrogen Compounds (Academic Press, 1972), and in Mark, J. E., Allcock, H. R., West, R., Inorganic Polymers (Prentice Hall, 1992).

Component E is preferably a mixture of cyclic phenoxyphosphazenes having three and four phenoxy phosphazene units. The weight ratio of rings comprising three phenoxyphosphazene units to rings comprising four phenoxyphosphazene units is preferably about 80:20. Larger rings of the phenoxyphosphazene units may likewise be present but in smaller amounts. Suitable cyclic phenoxyphosphazenes are obtainable from Fushimi Pharmaceutical Co., Ltd., under the name Rabitle^{®} FP-100. This is a matt-white/yellowish solid having a melting point of 110 °C, a phosphorus content of 13.4% and a nitrogen content of 6.0%. The proportion of rings comprising three phenoxyphosphazene units is at least 80.0 wt%.

The polyamide composition preferably can comprise 1.0 to 6.0 wt%, preferably 2.5 to 5.5 wt%, in particular 3.0 to 5.0 wt% of at least one aliphatic or aromatic ester of phosphoric acid or polyphosphoric acid as flame retardant.

For this reason especially solid, non-migrating phosphate esters having a melting point between 70 °C and 150 °C are preferred. This has the result that the products are easy to meter and exhibit markedly less migration in the molding material. Particularly preferred examples are the commercially available phosphate esters PX-200 (CAS: 139189-30-3) from Daihachi, or Sol-DP from ICL-IP. Further phosphate esters with appropriate substitution of the phenyl groups are conceivable when this allows the preferred melting range to be achieved. The general structural formula, depending on the substitution pattern in the ortho position or the para position on the aromatic ring, is as follows: 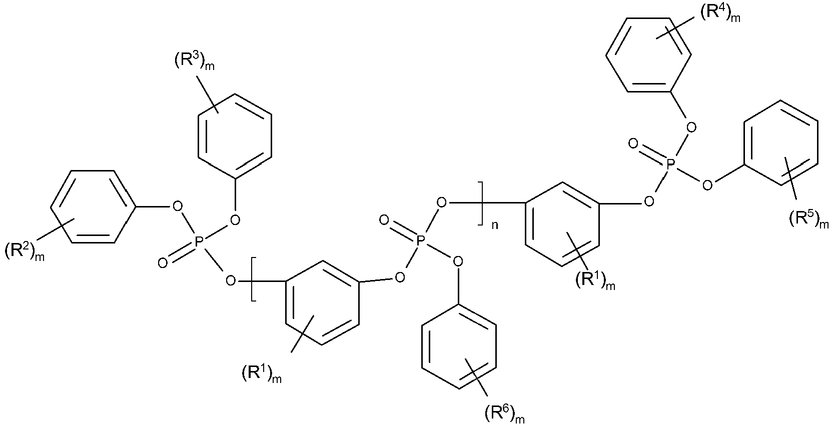 or 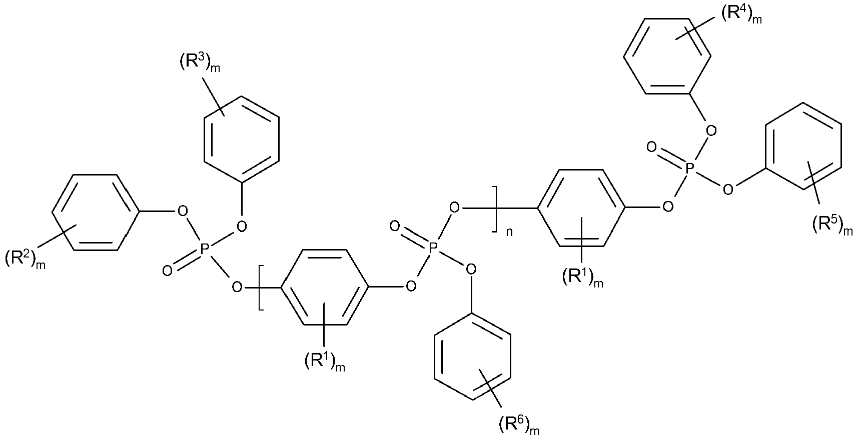 or 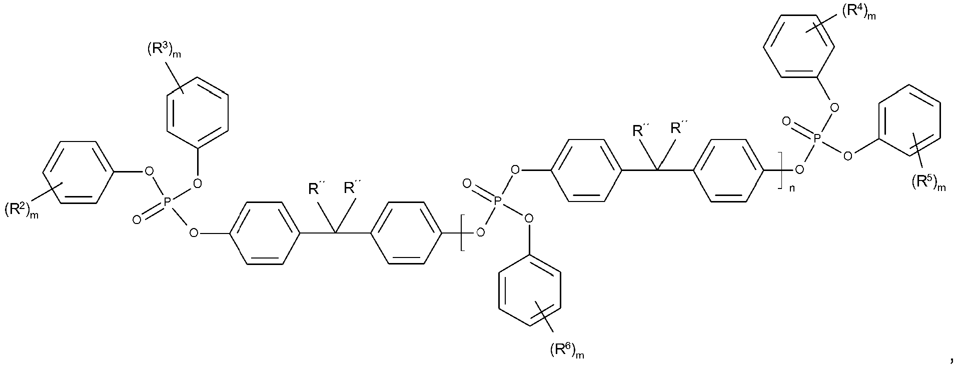 wherein
R¹ = H, methyl, ethyl or isopropyl, but preferably H.
n = between 0 and 7, but preferably 0.
R²⁻⁶ = H, methyl, ethyl or isopropyl, but preferably methyl. R⁶ is preferably identical to R⁴ and R⁵.
m = may be, but needs not be identical and is between 1, 2, 3, 4 and 5, but preferably 2.
R" = may be H, methyl, ethyl or cyclopropyl, but preferably methyl and H.

PX-200 is given as a concrete example:

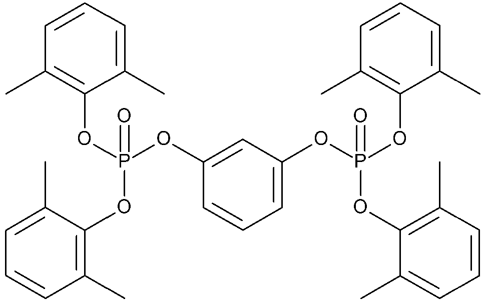

It is particularly preferable when at least one aromatic ester of polyphosphoric acid is employed. Such aromatic polyphosphates are obtainable for example from Daihachi Chemical under the name PX-200.

As component E, the polyamide composition according to the invention can comprise 5.0 to 30.0 wt%, preferably 10.0 to 25.0 wt%, in particular 12.0 to 20.0 wt%, for example about 16.0 wt%, of at least one metal phosphinate or phosphinic acid salt described hereinbelow as flame retardant.

Examples of preferred flame retardants of component E are metal phosphinates derived from hypophosphorous acid. A metal salt of hypophosphorous acid with Mg, Ca, Al or Zn as the metal may be employed for example. Particular preference is given here to aluminum hypophosphite.

Also suitable are phosphinic acid salts of formula (I) or/and diphosphinic acid salts of formula (II) or polymers thereof 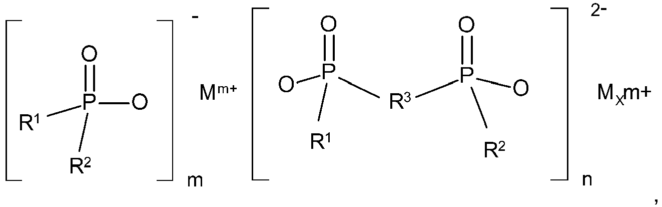 in which
R¹, R² are identical or different and represent hydrogen, C₁-C₆-alkyl, linear or branched, and/or aryl;
R³ represents C₁-C₁₀-alkylene, linear or branched, C₆-C₁₀-arylene, -alkylarylene or -aryl-alkylene;
M represents Mg, Ca, Al, Sb, Sn, Ge, Ti, Zn, Fe, Zr, Ce, Bi, Sr, Mn, Li, Na, K and/or a protonated nitrogen base;
m = 1 to 4; n = 1 to 4; x = 1 to 4, preferably m = 3, x = 3.

Preferably, R¹, R² are identical or different and represent hydrogen, methyl, ethyl, n-propyl, isopropyl, n-butyl, tert.-butyl, n-pentyl and/or phenyl.

Preferably, R³ represents methylene, ethylene, n-propylene, isopropylene, n-butylene, tert-butylene, n-pentylene, n-octylene or n-dodecylene, phenylene or naphthylene; methylphenylene, ethylphenylene, tert-butylphenylene, methylnaphthylene, ethylnaphthylene or tert-butylnaphthylene; phenylmethylene, phenylethylene, phenylpropylene or phenylbutylene.

Particularly preferably, R¹, R² are hydrogen, methyl, ethyl, and M is Al, particular preference is given to Al hypophosphite.

Production of the phosphinates is preferably effected by precipitation of the corresponding metal salts from aqueous solutions. However, the phosphinates may also be precipitated in the presence of a suitable inorganic metal oxide or sulfide as support material (white pigments, for example TiO₂, SnO₂, ZnO, ZnS, SiO₂). This accordingly affords surface-modified pigments which can be employed as laser-markable flame retardants for thermoplastic polyesters.

It is preferable when metal salts of substituted phosphinic acids are employed in which compared to hypophosphorous acid one or two hydrogen atoms have been replaced by phenyl, methyl, ethyl, propyl, isobutyl, isooctyl or radicals R'-CH-OH have been replaced by R'-hydrogen, phenyl, tolyl. The metal is preferably Mg, Ca, Al, Zn, Ti, Fe. Aluminum diethylphosphinate (DEPAL) is particularly preferred.

For a description of phosphinic acid salts or diphosphinic acid salts reference may be made to DE-A 199 60 671 and also to DE-A 44 30 932 and DE-A 199 33 901.

Further flame retardants are, for example, halogen-containing flame retardants.

Suitable halogen-containing flame retardants are preferably brominated compounds, such as brominated diphenyl ether, brominated trimethylphenylindane (FR 1808 from DSB) tetrabromobisphenol A and hexabromocyclododecane.

Suitable flame retardants are preferably brominated compounds, such as brominated oligocarbonates (BC 52 or BC 58 from Great Lakes), having the structural formula:

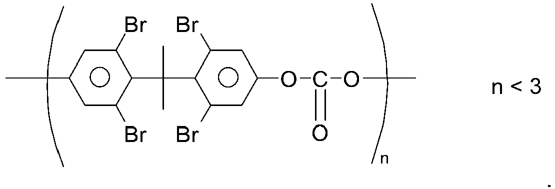

Especially suitable are polypentabromobenzyl acrylates, where n > 4 (e.g. FR 1025 from ICL-IP having the formula:

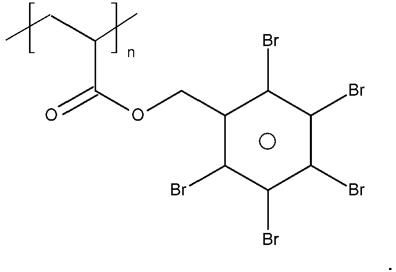

Preferred brominated compounds further include oligomeric reaction products (n > 3) of tetrabromobisphenol A with epoxides (e.g. FR 2300 and 2400 from DSB) having the formula:

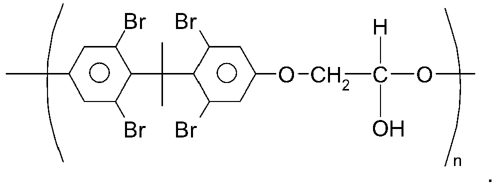

The brominated oligostyrenes preferably employed as flame retardants have an average degree of polymerization (number-average) between 3 and 90, preferably between 5 and 60, measured by vapor pressure osmometry in toluene. Cyclic oligomers are likewise suitable. In a preferred embodiment of the invention the brominated oligomeric styrenes have the formula I shown below in which R represents hydrogen or an aliphatic radical, in particular an alkyl radical, for example CH₂ or C₂H₅, and n represents the number of repeating chain building blocks. R¹ may be H or else bromine or else a fragment of a customary free radical former:

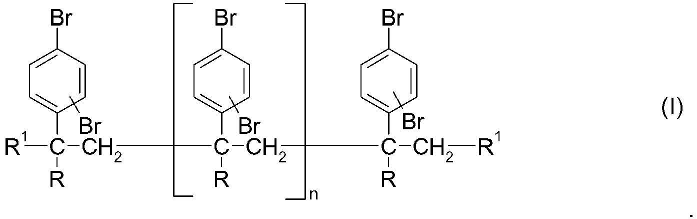

The value n may be 1 to 88, preferably 3 to 58. The brominated oligostyrenes comprise 40.0 to 80.0 wt%, preferably 55.0 to 70.0 wt%, of bromine. Preference is given to a product consisting predominantly of polydibromostyrene. The substances are meltable without decomposing, and soluble in tetrahydrofuran for example. Said substances may be produced either by ring bromination of - optionally aliphatically hydrogenated - styrene oligomers such as are obtained for example by thermal polymerization of styrene (according to DT-OS 25 37 385) or by free-radical oligomerization of suitable brominated styrenes. The production of the flame retardant may also be effected by ionic oligomerization of styrene and subsequent bromination. The amount of brominated oligostyrene necessary for endowing the polyamides with flame retardant properties depends on the bromine content. The bromine content in the molding materials according to the invention is from 2.0 to 30.0 wt%, preferably from 5.0 to 12.0 wt%.

The brominated polystyrenes according to the invention are typically obtained by the process described in EP-A 047 549:

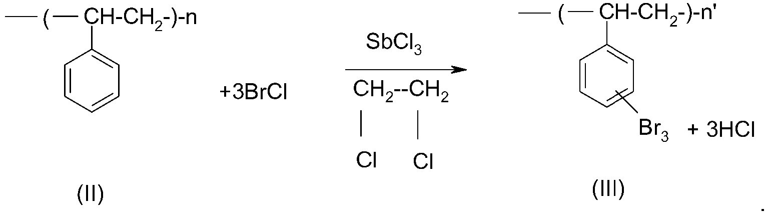

The brominated polystyrenes obtainable by this process and commercially available are predominantly ring-substituted tribrominated products. n' (see III) generally has values of 125 to 1500 which corresponds to a molecular weight of 42500 to 235000, preferably of 130000 to 135000.

The bromine content (based on the content of ring-substituted bromine) is generally at least 50.0 wt%, preferably at least 60.0 wt% and in particular 65.0 wt%.

The commercially available pulverulent products generally have a glass transition temperature of 160 °C to 200 °C and are for example obtainable under the names SAYTEX^{®} HP-7010 from Albemarle and Pyrocheck^{®} PB 68 from Ferro Corporation.

Mixtures of the brominated oligostyrenes with brominated polystyrenes may also be employed in the molding materials according to the invention, the mixing ratio being freely choosable.

Also suitable are chlorine-containing flame retardants, Declorane Plus^{®} from OxyChem being preferable.

Suitable halogen-containing flame retardants are preferably ring-brominated polystyrene, brominated polybenzyl acrylates, brominated bisphenol A epoxide oligomers or brominated bisphenol A polycarbonates.

In one embodiment of the invention no halogen-containing flame retardants are employed in the polyamide composition according to the invention.

A flame retardant melamine compound suitable as component E in the context of the present invention is a melamine compound which when added to glass fiber filled polyamide molding materials reduces flammability and influences fire behavior in a fire retarding fashion, thus resulting in improved properties in the UL 94 tests and in the glow wire test.

The melamine compound is for example selected from melamine borate, melamine phosphate, melamine sulfate, melamine pyrophosphate, melam, melem, melon or melamine cyanurate or mixtures thereof.

The melamine cyanurate preferentially suitable according to the invention is a reaction product of preferably equimolar amounts of melamine (formula I) and cyanuric acid/isocyanuric acid (formulae la and Ib).

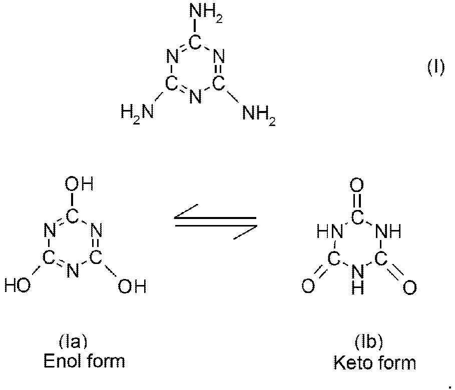

It is obtained for example by reaction of aqueous solutions of the starting compounds at 90 °C to 100 °C. The commercially available product is a white powder having an average grain size d₅₀ of 1.5 to 7 µm and a d₉₉ value of less than 50 µm.

Further suitable compounds (often also described as salts or adducts) are melamine sulfate, melamine, melamine borate, oxalate, phosphate prim., phosphate sec. and pyrophosphate sec., melamine neopentyl glycol borate. According to the invention the molding materials are preferably free from polymeric melamine phosphate (CAS no. 56386-64-2 or 218768-84-4).

This is to be understood as meaning melamine polyphosphate salts of a 1,3,5-triazine compound which have an average degree of condensation number n between 20 and 200 and a 1,3,5-triazine content of 1.1 to 2.0 mol of a 1,3,5-triazine compound selected from the group consisting of melamine, melam, melem, melon, ammeline, ammelide, 2-ureidomelamine, acetoguanamine, benzoguanamine and diaminophenyltriazine per mole of phosphorus atom. Preferably, the n-value of such salts is generally between 40 and 150 and the ratio of a 1,3,5-triazine compound per mole of phosphorus atom is preferably between 1.2 and 1.8. Furthermore, the pH of a 10 wt% aqueous slurry of salts produced according to EP-B1 095 030 will generally be more than 4.5 and preferably at least 5.0. The pH is typically determined by adding 25 g of the salt and 225 g of clean water at 25 °C into a 300 ml beaker, stirring the resultant aqueous slurry for 30 minutes and then measuring the pH. The abovementioned n-value, the number-average degree of condensation, may be determined by means of 31P solid-state NMR. J. R. van Wazer, C. F. Callis, J. Shoolery and R. Jones, J. Am. Chem. Soc., 78, 5715, 1956 discloses that the number of adjacent phosphate groups gives a unique chemical shift which permits clear distinction between orthophosphates, pyrophosphates, and polyphosphates.

Suitable guanidine salts are

| | CAS no. |
|---|---|
| guanidine carbonate | 593-85-1 |
| guanidine cyanurate prim. | 70285-19-7 |
| guanidine phosphate prim. | 5423-22-3 |
| guanidine phosphate sec. | 5423-23-4 |
| guanidine sulfate prim. | 646-34-4 |
| guanidine sulfate sec. | 594-14-9 |
| guanidine pentaerythritol borate | n.a. |
| guanidine neopentyl glycol borate | n.a. |
| and urea phosphate green | 4861-19-2 |
| urea cyanurate | 57517-11-0 |
| ammeline | 645-92-1 |
| ammelide | 645-93-2 |
| melem | 1502-47-2 |
| melon | 32518-77-7 |

In the context of the present invention "compounds" is to be understood as meaning not only for example benzoguanamine itself and the adducts/salts thereof but also the nitrogen-substituted derivatives and the adducts/salts thereof.

Also suitable are ammonium polyphosphate (NH₄PO₃)ₙ where n is about 200 to 1000, preferably 600 to 800, and tris(hydroxyethyl)isocyanurate (THEIC) of formula IV 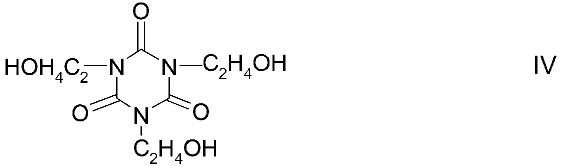 or the reaction products thereof with aromatic carboxylic acids Ar(COOH)ₘ which may optionally be present in a mixture with one another, wherein Ar represents a monocyclic, bicyclic or tricyclic aromatic six-membered ring system and m is 2, 3 or 4.

Examples of suitable carboxylic acids include phthalic acid, isophthalic acid, terephthalic acid, 1,3,5-benzenetricarboxylic acid, 1,2,4-benzenetricarboxylic acid, pyromellitic acid, mellophanic acid, prehnitic acid, 1-naphthoic acid, 2-naphthoic acid, naphthalenedicarboxylic acids, and anthracenecarboxylic acids.

Production is effected by reaction of the tris(hydroxyethyl)isocyanurate with the acids, the alkyl esters thereof or the halides thereof according to the processes in EP-A 584 567.

Such reaction products are a mixture of monomeric and oligomeric esters which may also be crosslinked. The degree of oligomerization is typically 2 to about 100, preferably 2 to 20. Preference is given to using mixtures of THEIC and/or reaction products thereof with phosphorus-containing nitrogen compounds, in particular (NH₄PO₃)ₙ or melamine pyrophosphate or polymeric melamine phosphate. The mixing ratio for example of (NH₄PO₃)ₙ to THEIC is preferably 90.0 to 50.0:10.0 to 50.0, in particular 80.0 to 50.0:50.0 to 20.0, wt% based on the mixture of such compounds.

Also suitable flame retardants are benzoguanidine compounds of formula V 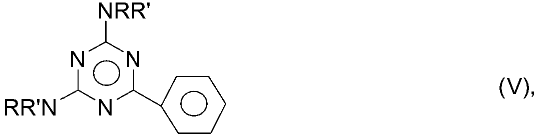 in which R, R' represents straight-chain or branched alkyl radicals having 1 to 10 carbon atoms, preferably hydrogen, and in particular adducts thereof with phosphoric acid, boric acid and/or pyrophosphoric acid.

Also preferred are allantoin compounds of formula VI, 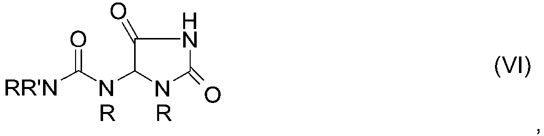 wherein R, R' are as defined in formula V, and also the salts thereof with phosphoric acid, boric acid and/or pyrophosphoric acid and also glycolurils of formula VII or the salts thereof with the abovementioned acids 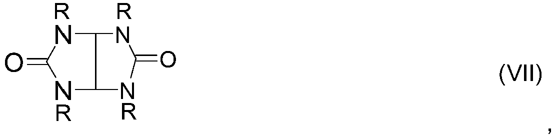 in which R is as defined in formula V.

Suitable products are commercially available or obtainable as per DE-A 196 14 424.

The cyanoguanidine (formula VIII) usable in accordance with the invention is obtainable for example by reacting calcium cyanamide with carbonic acid, the cyanamide produced dimerizing at from pH 9 to pH 10 to afford cyanoguanidine.

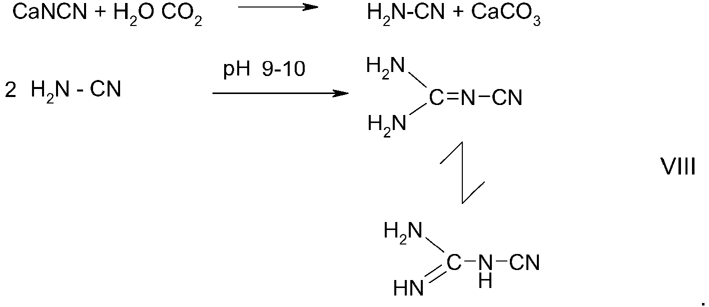

The commercially available product is a white powder having a melting point of 209 °C to 211 °C.

It is particularly preferable to employ melamine cyanurate (for example Melapur^{®} MC25 from BASF SE).

It is further possible to employ separate metal oxides such as antimony trioxide, antimony pentoxide, sodium antimonate and similar metal oxides. However it is preferable to eschew the use of such metal oxide since they are already present in component F. For a description of pentabromobenzyl acrylate and antimony trioxide or antimony pentoxide reference may be made to EP-A 0 624 626.

It is also possible to employ phosphorus, for example red phosphorus, as flame retardant. Red phosphorus may for example be employed in the form of a masterbatch.

Also contemplated are dicarboxylic acids of formula 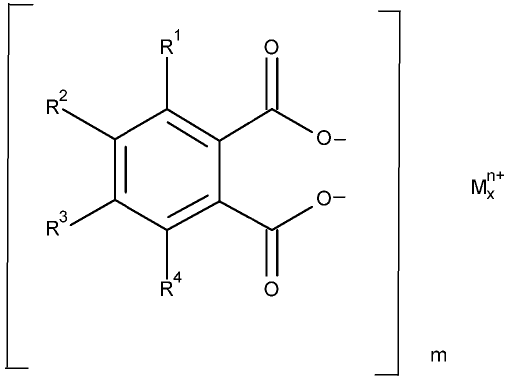 wherein
R¹ to R⁴ independently of one another represent halogen or hydrogen with the proviso that at least one radical R¹ to R⁴ represents halogen,
x = 1 to 3, preferably 1, 2
m = 1 to 9, preferably 1 to 3, 6, 9, in particular 1 to 3
n = 2 to 3
M = alkaline earth metal, Ni, Ce, Fe, In, Ga, Al, Pb, Y, Zn, Hg.

Preferred dicarboxylic acid salts comprise as radicals R¹ to R⁴ independently of one another Cl or bromine or hydrogen, especially preferably all radicals R¹ to R⁴ are Cl or/and Br.

Be, Mg, Ca, Sr, Ba, Al, Zn, Fe are preferred as metals M.

Such dicarboxylic acid salts are commercially available or producible according to the processes described in US 3,354,191.

Also employable as component E are functional polymers. These may be flame retardant polymers for example. Such polymers are described in US 8,314,202 for example and comprise 1,2-bis[4-(2-hydroxyethoxy)phenyllethanone repeating units. A further suitable functional polymer for increasing the amount of carbon residue is poly(2,6-dimethyl-1,4-phenyleneoxide) (PPPO).

The present invention further relates to a process for preparing a polymer product, comprising the steps of the method for manufacturing the polyamide B according to the present invention and comprising the following step:
- converting the polyamide obtainable or obtained by the process according to the present invention to obtain a polymer product.

The present invention relates also to a process for preparing a polymer product, comprising the following step:
- converting the polyamide B1 obtainable or obtained by the process according to the present invention to obtain a polymer product.

Preferably, the polymer product is a granulate, strand, rod, plate, pipe, foil, layer, film, sheet, fiber, filament, coating, extruded and/or molded part, soft foam, half-rigid foam and/or rigid foam. More preferably, the polymer product is an injection molded part.

The present invention therefore relates more preferably to a process for preparing moldings comprising injection-molding the polyamide B or the polyamide B1 or the polyamide composition according to the present invention.

The present invention therefore further relates to a polymer product comprising the polyamide B1 or the polyamide composition according to the present invention, wherein the polymer product is preferably a granulate, strand, rod, plate, pipe, foil, layer, film, sheet, fiber, filament, coating, extruded and/or molded part, soft foam, half-rigid foam and/or rigid foam. More preferably, the polymer product is an injection molded part.

Preferably, the present invention relates to an injection-molded part comprising the polyamide B1 or the polyamide composition according to according to the present invention.

The present invention further relates to the use of the polyamide B1 or the polyamide or the polyamide composition according to the present invention for producing polymer products selected from a granulate, strand, rod, plate, pipe, foil, layer, film, sheet, fiber, filament, coating, extruded and/or molded part, soft foam, half-rigid foam and rigid foam. More preferably, the polymer product is an injection molded part.

Preferably, the present invention relates to the use of the polyamide B1 or the polyamide composition according to the present invention for producing injection-molded parts.

Further preferably, the polymer product prepared by the process of the present invention comprises a semicrystalline or amorphous polyamide or a mixture thereof, preferably selected from one or more elements of the group consisting of PA 6, PA 66, PA 6/66, PA 66/6, PA 12, PA 610, PA 46, PA 6T/6, PA 6T/66, PA 9T, PA 10T, PA 6I/6T, PA 6T/6I, PA 6T/61/66, PA 66/6T and PA 4T, more preferably selected from one or more elements of the group consisting of PA 6, PA 66, PA 6/66 and PA 66/6.

The polymer product preferably is or is a part of:
- a part of a car, preferably cylinder head cover, engine cover, housing for charge air cooler, charge air cooler flap, intake pipe, intake manifold, connector, gear wheel, fan wheel, cooling water box, housing or housing part for heat exchanger, coolant cooler, charge air cooler,
   thermostat, water pump, radiator, fastening part or part of battery system for electromobility, dashboard, steering column switch, seat, headrest, center console, transmission component, door module, car exterior for A, B, C or D pillar cover, spoiler, door handle, exterior mirror, windscreen wiper, windscreen wiper protection housing, decorative grill, cover strip, roof rail, window frame, sunroof frame, antenna panel, headlight and taillight, engine cover, cylinder head cover, intake manifold, airbag, or cushion;
- a cloth, preferably shirt, trousers, pullover, boot, shoe, shoe sole, tight or jacket;
- an electrical part, preferably electrical or electronic passive or active component, printed circuit board, printed circuit board, housing component, foil, line, switch, plug, socket, distributor, relay, resistor, capacitor, inductor, bobbin, lamp, diode, LED, transistor, connector, regulator, integrated circuit (IC), processor, controller, memory, sensor, connectors, microswitches, microbuttons, semiconductor, reflector housing for light-emitting diodes (LED), fastener for electrical or electronic component, spacer, bolt, strip, slide-in guide, screw, nut, film hinge, snap hooks (snap-in) or spring tongue;
- a consumer and/or pharmaceutical product, preferably tennis string, climbing rope, bristle, brush, artificial grass, 3D printing filament, grass trimmer, zipper, hook and loop fastener, paper machine clothing, extrusion coating, fishing line, fishing net, offshore line and rope, vial, syringe, ampoule, bottle, sliding element, spindle nut, chain conveyor, plain bearing, roller, wheel, gear, roller, ring gear, screw and spring dampers, hose, pipeline, cable sheathing, socket, switch, cable tie, fan wheel, carpet, box or bottle for cosmetics, mattress, cushion or insulation; and/or
- packaging for the food industry; preferably mono- or multi-layer blown film, cast film (mono- or multi-layer), biaxially stretched film, laminating film.

The present invention further relates to a process for preparing a polymer product according to the present invention, wherein the content of the polyamide B in the polymer product is generally 1 weight-% or more, preferably 2 weight-% or more, more preferably 5 weight-% or more, more preferably 15 weight-% or more, more preferably 30 weight-% or more, more preferably 40 weight-% or more, more preferably 60 weight-% or more, more preferably 80 weight-% or more, more preferably 90 weight-% or more, more preferably 95 weight-% or more; and/or
wherein the content of the polyamide A in the polymer product is generally 100 weight-% or less, preferably 95 weight-% or less, more preferably 90 weight-% or less, more preferably 50 weight-% or less, more preferably 25 weight-% or less, more preferably 10 weight-% or less; and
preferably wherein the content is determined based on identity preservation and/or segregation and/or mass balance and/or book and claim chain of custody models, preferably based on mass balance, preferably the International Sustainability and Carbon Certification (ISCC) standard.

The converting steps to obtain the polymer product may comprise one or more synthesis steps and can be performed by conventional synthesis and technics well known to a person skilled in the art. Independent of the person skilled in the art to assess novelty and inventive step of the independent claims, the person skilled in the art to perform the converting step is from the technical field(s) depolymerization and/or synthesis and/or production of monomers, polymers and polymer compounds, and its further processing (e.g. extrusion, injection molding). Examples of the steps of the conversion are described in "Industrial Organic Chemistry", 3. volume, Wiley-VCH, 1997; ISBN: 978-3-527-28838-0; "Kunststoffhandbuch", 11 volumes in 17 sub-volumes, Carl Hanser Verlag, especially volume 6, "Polyamide", 1. edition, 1966; "Injection Molding Reference Guide, 4th edition, CreateSpace Independent Publishing Platform, 2011, ISBN: 978-1466407824; WO2008155271 (A1) and WO2013139827 (A1).

The polyamide B, the polyamide B1 and the polyamide composition are especially useful for injection-molding.

The present invention therefore relates to an injection-molded part comprising the polyamide B1 and the polyamide composition according to the present invention. Examples for injection-molded parts according to the present invention are injection-molded parts of automobiles, electronic appliances, chemical equipment, machinery and the like. Almost all parts of the car, such as engine parts, electrical parts and body parts, are included by the injection-molded parts according to the present invention. The engine parts include among others the intake system and the fuel system, such as the engine cylinder head cover, throttle, air filter machine casing, vehicle air horn, vehicle air conditioning hose, cooling fan and its casing, inlet pipe, brake oil tank and filling. The parts of the car body include among others automobile fenders, rear view frames, bumpers, instrument panels, luggage racks, door handles, wiper brackets, seat belt buckles, and various decorative parts in the car. In-car electrical appliances inclide among others electronically controlled doors and windows, connectors, crisper boxes, cable ties.

The present invention further relates to the use of polyamide B1 and the polyamide composition according to the present invention for producing injection-molded parts and a process for preparing moldings comprising injection-molding the polyamide B1 and the polyamide composition according to the present invention. Examples for suitable injection-molded parts are mentioned above.

The invention is further illustrated by the following examples.

### Examples

### Production of polyamide B and polyamide compositions comprising polyamide B

### Viscosity measurements

The viscosity number (VN) of the polyamides and polyamide compositions according to the present invention is measured according to EN ISO 307: 2019 in sulfuric acid (0.5 % [m/v] of polyamide in 96wt.-% [m/m] sulfuric acid at 25°C).

The melt volume-flow rate (MVR) of the polyamides according to the present invention is measured according to EN ISO 1133-1:2011, procedure A. The material is melted in a heated cylinder and extruded by a piston under defined pressure through a nozzle into open space. Test conditons: 275 °C / 5 kg; material contains less than 0.05 % water. The volume of the extrudate is measured as a function of time (in Table 1 (below) after 5 min, 10 min and 30 min).

The concentration of amino end groups (AEG [meq/kg]) of the polyamides disclosed in the present invention is measured by means of a potentiometric titration of polyamide-methanol phenol solution with aqueous hydrochloric acid. The concentration of carboxyl end groups (CEG [meq/kg]) of the polyamides disclosed in the present invention is measured by means of a titration of a polyamide benzyl alcohol solution with alcoholic potassium hydroxide solution.

### Example 1C, 2C and 3 to 6

The components mentioned in Table 1 were compounded in the ratios shown in the table. In inventive examples 3 to 6 the ratio between Ultramid B33 and AH salt is changed. In comparative examples 1C no AH salt is used and in comparative example 2 PDMA is used instead of an AH salt. A double screw extruder MC/26/2 from Coperion at 50 kg/h, 500 Rpm and 12 Zones at Temp. 300/320/320/320/330/330/330/330/330/330/330/330°C is used.

All additives were added in Coldfeed, the glass fiber in zone 5.

**Table 1**

| Example | 1C* | 2C* | 3 | 4 | 5 | 6 |
|---|---|---|---|---|---|---|
| Ultramid B33 (foil recyclate)¹⁾ | 67.443 | 66.943 | 67.343 | 67.243 | 67.143 | 66.943 |
| Glass fiber (ø 10 µm)²⁾ | 30 | 30 | 30 | 30 | 30 | 30 |
| Arcawax ^{®} C³⁾ | 0.2 | 0.2 | 0.2 | 0.2 | 0.2 | 0.2 |
| Cul/KI in Ultramid^{®} B27⁴⁾ | 0.69 | 0.69 | 0.69 | 0.69 | 0.69 | 0.69 |
| Carbon black in Lupolen ^{®} 1800H⁵⁾ | 1.667 | 1.667 | 1.667 | 1,667 | 1.667 | 1.667 |
| AH-Salt (dry) [wt%]⁶⁾ | | | 0.1 | 0.2 | 0.3 | 0.5 |
| PMDA [wt%]⁷⁾ | | 0.5 | | | | |
| MVR 5 Min. | 16.7 | 34.5 | 22.4 | 33.3 | 51.7 | 89.8 |
| MVR 10 Min. | 17.7 | 37.6 | 23.1 | 33.1 | 49.0 | 80.0 |
| MVR 30 Min. | 18.7 | 40.8 | 22.8 | 30.6 | 41.6 | 59.2 |
| AEG [meq/kg] | 34 | 11 | 28 | 32 | 37 | 48 |
| CEG [meq/kg] | 36 | 44 | 32 | 40 | 43 | 56 |
| VN | 172 | 144 | 163 | 145 | 132 | 113 |

| | | | | | | |
|---|---|---|---|---|---|---|
| Only in the inventive examples a reduction of the viscosity number VN is achieved making the polyamide composition suitable for injection molding and at the same time a significant increase of the MVR over the time is avoided. * Comparative example 1) Ultramid B33 (i.e. Ultramid B33 01) is an intermediate viscosity polyamide 6 grade from BASF SE; 2) ChopVantage ^{®} HP 3610 from Nippon Electric Glass; 3) N, N' Ethylene Bisstearamide from Lonza; 4) 20% Cul/KI (1/3) in 80% Ultramid^{®} B27; Ultramid^{®} B27 is a polyamide 6 grade of low viscosity from BASF SE; 5) 30% Carbon black Black Pearls ^{®} 880 from Cabot Corporation in 70% Lupolen^{®} 1800 H from Lyondellbasell; Lupolen 1800 H is a low density polyethylene resin; 6) Hexamethylendiamine adipate (salt of adipic acid and hexamethylene diamine); 7) Pyromellitic dianhydride | | | | | | |

## Claims

1. A method for manufacturing a polyamide B comprising melt-mixing a polyamide A and a salt C of a diacid and a diamine,
wherein the polyamide B has a lower viscosity number, measured according to EN ISO 307: 2019 in sulfuric acid, than the polyamide A, and
wherein the ratio of the ratio of the concentration of amino end groups of polyamide B to the concentration of amino end groups of polyamide A, measured by means of a potentiometric titration of polyamide-methanol phenol solution with aqueous hydrochloric acid, to the ratio of the concentration of carboxyl end groups of polyamide B to the concentration of carboxyl end groups of polyamide A, measured by means of a titration of a polyamide benzyl alcohol solution with alcoholic potassium hydroxide solution, in polyamide B is 0.8 to 1.2.

2. The method according to claim 1, wherein the ratio of the concentration of amino end groups of polyamide B, measured by means of a potentiometric titration of polyamide-methanol phenol solution with aqueous hydrochloric acid, to the concentration of carboxyl end groups of polyamide B, measured by means of a titration of a polyamide benzyl alcohol solution with alcoholic potassium hydroxide solution is ≥ 0.2, preferably ≥ 0.40, more preferably ≥ 0.70.

3. The method according to claim 1 or 2, wherein the salt C of a diacid and diamine is present in an amount of 0.01 to 1 % by weight, preferably 0.1 to 0.9 % by weight, based on polyamide A.

4. The method according to any one of claims 1 to 3, wherein the salt C of a diacid and diamine is an adipic acid hexamethylendiamine salt.

5. The method according to any one of claims 1 to 4 wherein the viscosity number of polyamide A is from 120 to 250 cm³/g, preferably from 150 to 220 cm³/g, more preferably from 170 to 210.

6. The method according to any one of claims 1 to 5, wherein the viscosity number of polyamide B is from 80 to 200 cm³/g, preferably from 100 to 180 cm³/g, more preferably from 120 to 160.

7. The method according to any one of claims 1 to 6, wherein the polyamide A is a semicrystalline or amorphous polyamide or a mixture thereof, preferably selected from one or more elements of the group consisting of PA 6, PA 66, PA 6/66, PA 66/6, PA 12, PA 610, PA 46, PA 6T/6, PA 6T/66, PA 9T, PA 10T, PA 6I/6T, PA 6T/6I, PA 6T/6I/66, PA 66/6T and PA 4T, more preferably selected from one or more elements of the group consisting of PA 6, PA 66, PA 6/66 and PA 66/6.

8. The method according to any one of claims 1 to 7, wherein the polyamide A comprises post-industrial and/or post consumer waste, preferably from extrusion processes selected from the group of blow molding, film extrusion, tube extrusion, sheet extrusion, fiber spinning and mixtures thereof.

9. The method according to any one of claims 1 to 8, wherein the polyamide A consists of post-industrial and/or post consumer waste.

10. The method according to any one of claims 1 to 9, wherein the melt-mixing is carried out in the presence of a filler (D) and/or further additives (E).

11. Process for preparing a polymer product, comprising the steps according to any one of claims 1 to 10, comprising the following step:
- converting the polyamide B obtainable or obtained by the process according to any one of claims 1 to 10 to obtain the polymer product,wherein the polymer product is preferably a granulate, strand, rod, plate, pipe, foil, layer, film, sheet, fiber, filament, coating, extruded and/or molded part, soft foam, half-rigid foam and/or rigid foam.

12. Process according to claim 11, wherein the content of the polyamide B in the polymer product is 1 weight-% or more, preferably 2 weight-% or more, more preferably 5 weight-% or more, more preferably 15 weight-% or more, more preferably 30 weight-% or more, more preferably 40 weight-% or more, more preferably 60 weight-% or more, more preferably 80 weight-% or more, more preferably 90 weight-% or more, more preferably 95 weight-% or more; and/or
wherein the content of the polyamide B in the polymer product is 100 weight-% or less, preferably 95 weight-% or less, more preferably 90 weight-% or less, more preferably 50 weight-% or less, more preferably 25 weight-% or less, more preferably 10 weight-% or less; and
preferably wherein the content is determined based on identity preservation and/or segregation and/or mass balance and/or book and claim chain of custody models, preferably based on mass balance, preferably the International Sustainability and Carbon Certification (ISCC) standard.

13. A polyamide B1 constructed from
a) 99.00 to 99,99 % by weight, preferably 99.10 to 99.90 % by weight of polyamide B* formed from units selected from one or more diamines in combination with one or more diacids, one or more lactams and mixtures thereof, and
b) 0.01 to 1 % by weight, preferably 0.1 to 0.9 % by weight of units derived from a diacid and a diamine forming a salt C,
wherein the units derived from the diacid and the diamine forming the salt C are different from the units forming the polyamide B*.

14. The polyamide B1 according to claim 13, wherein the diacid and the diamine forming the salt C are adipic acid and hexamethylendiamine.

15. The polyamide B1 according to claim 13 or 14, wherein the viscosity number of polyamide B is from 80 to 200 cm³/g, preferably from 100 to 180 cm³/g, more preferably from 120 to 160.

16. The polyamide B1 according to any one of claims 13 to 15, wherein the polyamide B* is a semicrystalline or amorphous polyamide or a mixture thereof, preferably selected from one or more elements of the group consisting of PA 6, PA 12, PA 610, PA 46, PA 6T/6, PA 9T, PA 10T, PA 6I/6T, PA 6T/6I, and PA 4T, more preferably PA 6.

17. A polyamide composition comprising:
(i) the polyamide B1 according to any one of claims 13 to 16; and
(ii) optionally a filler material (D) and
(iii) optionally at least one further additive (E),
wherein at least either one filler material (D) or one further additive is present.

18. A polymer product comprising the polyamide B1 according to any one of claims 13 to 16 or the polyamide composition according to claim 17, wherein the polymer product is preferably a granulate, strand, rod, plate, pipe, foil, layer, film, sheet, fiber, filament, coating, extruded and/or molded part, soft foam, half-rigid foam and/or rigid foam.

19. Use of the polyamide B1 according to any one of claims 13 to 16 or the polyamide composition according to claim 17 for producing polymer products selected from a granulate, strand, rod, plate, pipe, foil, layer, film, sheet, fiber, filament, coating, extruded and/or molded part, soft foam, half-rigid foam and rigid foam.

## Patentansprüche

1. Verfahren zur Herstellung eines Polyamids B, umfassend das Schmelzemischen eines Polyamids A und eines Salzes C einer Disäure und eines Diamins,
wobei das Polyamid B eine niedrigere Viskositätszahl, gemessen gemäß EN ISO 307: 2019 in Schwefelsäure, als das Polyamid A aufweist und
wobei das Verhältnis des Verhältnisses der Konzentration von Aminoendgruppen von Polyamid B zur Konzentration von Aminoendgruppen von Polyamid A, gemessen mittels potentiometrischer Titration von Polyamid-Methanol-Phenol-Lösung mit wässriger Salzsäure, zum Verhältnis der Konzentration von Carboxylendgruppen von Polyamid B zur Konzentration von Carboxylendgruppen von Polyamid A, gemessen mittels Titration einer Polyamid-Benzylalkohol-Lösung mit alkoholischer Kaliumhydroxidlösung, in Polyamid B 0,8 bis 1,2 beträgt.

2. Verfahren nach Anspruch 1, wobei das Verhältnis der Konzentration von Aminoendgruppen von Polyamid B, gemessen mittels potentiometrischer Titration von Polyamid-Methanol-Phenol-Lösung mit wässriger Salzsäure, zur Konzentration von Carboxylendgruppen von Polyamid B, gemessen mittels Titration einer Polyamid-Benzylalkohol-Lösung mit alkoholischer Kaliumhydroxidlösung, ≥ 0,2, vorzugsweise ≥ 0,40, weiter bevorzugt ≥ 0,70, beträgt.

3. Verfahren nach Anspruch 1 oder 2, wobei das Salz C einer Disäure und eines Diamins in einer Menge von 0,01 bis 1 Gew.-%, vorzugsweise 0,1 bis 0,9 Gew.-%, bezogen auf Polyamid A, vorliegt.

4. Verfahren nach einem der Ansprüche 1 bis 3, wobei es sich bei dem Salz C einer Disäure und eines Diamins um ein Adipinsäure-Hexamethylendiamin-Salz handelt.

5. Verfahren nach einem der Ansprüche 1 bis 4, wobei die Viskositätszahl von Polyamid A 120 bis 250 cm³/g, vorzugsweise 150 bis 220 cm³/g, weiter bevorzugt 170 bis 210, beträgt.

6. Verfahren nach einem der Ansprüche 1 bis 5, wobei die Viskositätszahl von Polyamid B 80 bis 200 cm³/g, vorzugsweise 100 bis 180 cm³/g, weiter bevorzugt 120 bis 160, beträgt.

7. Verfahren nach einem der Ansprüche 1 bis 6, wobei es sich bei dem Polyamid A um ein teilkristallines oder amorphes Polyamid oder eine Mischung davon handelt, vorzugsweise ausgewählt aus einem oder mehreren Elementen der Gruppe bestehend aus PA 6, PA 66, PA 6/66, PA 66/6, PA 12, PA 610, PA 46, PA 6T/6, PA 6T/66, PA 9T, PA 10T, PA 6I/6T, PA 6T/6I, PA 6T/6I/66, PA 66/6T und PA 4T, weiter bevorzugt ausgewählt aus einem oder mehreren Elementen der Gruppe bestehend aus PA 6, PA 66, PA 6/66 und PA 66/6.

8. Verfahren nach einem der Ansprüche 1 bis 7, wobei das Polyamid A postindustrielle Abfälle und/oder Gebrauchsabfälle umfasst, vorzugsweise aus Extrusionsprozessen aus der Gruppe Blasformen, Filmextrusion, Schlauchextrusion, Plattenextrusion, Faserspinnen und Mischungen davon.

9. Verfahren nach einem der Ansprüche 1 bis 8, wobei das Polyamid A aus postindustriellen Abfällen und/oder Gebrauchsabfällen besteht.

10. Verfahren nach einem der Ansprüche 1 bis 9, wobei das Schmelzemischen in Gegenwart eines Füllstoffs (D) und/oder weiterer Additive (E) durchgeführt wird.

11. Verfahren zur Herstellung eines Polymerprodukts, umfassend die Schritte nach einem der Ansprüche 1 bis 10, umfassend den folgenden Schritt:
- Umwandeln des nach dem Verfahren nach einem der Ansprüche 1 bis 10 erhältlichen oder erhaltenen Polyamids B zu dem Polymerprodukt, wobei es sich bei dem Polymerprodukt vorzugsweise um ein Granulat, einen Strang, einen Stab, eine Platte, ein Rohr, eine Folie, eine Schicht, einen Film, eine Platte, eine Faser, ein Filament, eine Beschichtung, ein extrudiertes und/oder geformtes Teil, einen Weichschaumstoff, einen Halbhartschaumstoff und/oder einen Hartschaumstoff handelt.

12. Verfahren nach Anspruch 11, wobei der Gehalt des Polyamids B in dem Polymerprodukt 1 Gew.-% oder mehr, vorzugsweise 2 Gew.-% oder mehr, weiter bevorzugt 5 Gew.-% oder mehr, weiter bevorzugt 15 Gew.-% oder mehr, weiter bevorzugt 30 Gew.-% oder mehr, weiter bevorzugt 40 Gew.-% oder mehr, weiter bevorzugt 60 Gew.-% oder mehr, weiter bevorzugt 80 Gew.-% oder mehr, weiter bevorzugt 90 Gew.-% oder mehr, weiter bevorzugt 95 Gew.-% oder mehr, beträgt; und/oder
wobei der Gehalt des Polyamids B in dem Polymerprodukt 100 Gew.-% oder weniger, vorzugsweise 95 Gew.-% oder weniger, weiter bevorzugt 90 Gew.-% oder weniger, weiter bevorzugt 50 Gew.-% oder weniger, weiter bevorzugt 25 Gew.-% oder weniger, weiter bevorzugt 10 Gew.-% oder weniger, beträgt; und
vorzugsweise wobei der Gehalt basierend auf Identity-Preservation- und/oder Segregation- und/oder Mass-Balance- und/oder Book-and-Claim-Chain-of-Custody-Modellen, vorzugsweise basierend auf Mass Balance, vorzugsweise der ISCC-Norm (ISCC = International Sustainability and Carbon Certification), bestimmt wird.

13. Polyamid B1, aufgebaut aus
a) 99,00 bis 99,99 Gew.-%, vorzugsweise 99,10 bis 99,90 Gew.-%, Polyamid B*, gebildet aus Einheiten, die aus einem oder mehreren Diaminen in Kombination mit einer oder mehreren Disäuren, einem oder mehreren Lactamen und Mischungen davon ausgewählt sind, und
b) 0,01 bis 1 Gew.-%, vorzugsweise 0,1 bis 0,9 Gew.-%, Einheiten, die sich von einer Disäure und einem Diamin, die ein Salz C bilden, ableiten,
wobei die Einheiten, die sich von der Disäure und dem Diamin, die ein Salz C bilden, ableiten, von den Einheiten, die das Polyamid B* bilden, verschieden sind.

14. Polyamid B1 nach Anspruch 13, wobei es sich bei der Disäure und dem Diamin, die das Salz C bilden, um Adipinsäure und Hexamethylendiamin handelt.

15. Polyamid B1 nach Anspruch 13 oder 14, wobei die Viskositätszahl von Polyamid B 80 bis 200 cm³/g, vorzugsweise 100 bis 180 cm³/g, weiter bevorzugt 120 bis 160, beträgt.

16. Polyamid B1 nach einem der Ansprüche 13 bis 15, wobei es sich bei dem Polyamid B* um ein teilkristallines oder amorphes Polyamid oder eine Mischung davon handelt, vorzugsweise ausgewählt aus einem oder mehreren Elementen der Gruppe bestehend aus PA 6, PA 12, PA 610, PA 46, PA 6T/6, PA 9T, PA 10T, PA 6I/6T, PA 6T/6I und PA 4T, weiter bevorzugt PA 6.

17. Polyamidzusammensetzung, umfassend:
(i) das Polyamid B1 nach einem der Ansprüche 13 bis 16; und
(ii) gegebenenfalls ein Füllstoffmaterial (D) und
(iii) gegebenenfalls mindestens ein weiteres Additiv (E),
wobei mindestens entweder ein Füllstoffmaterial (D) oder ein weiteres Additiv vorliegt.

18. Polymerprodukt, umfassend das Polyamid B1 nach einem der Ansprüche 13 bis 16 oder die Polyamidzusammensetzung nach Anspruch 17, wobei es sich bei dem Polymerprodukt vorzugsweise um ein Granulat, einen Strang, einen Stab, eine Platte, ein Rohr, eine Folie, eine Schicht, einen Film, eine Platte, eine Faser, ein Filament, eine Beschichtung, ein extrudiertes und/oder geformtes Teil, einen Weichschaumstoff, einen Halbhartschaumstoff und/oder einen Hartschaumstoff handelt.

19. Verwendung des Polyamids B1 nach einem der Ansprüche 13 bis 16 oder der Polyamidzusammensetzung nach Anspruch 17 zur Herstellung von Polymerprodukten, die aus einem Granulat, einem Strang, einem Stab, einer Platte, einem Rohr, einer Folie, einer Schicht, einem Film, einer Platte, einer Faser, einem Filament, einer Beschichtung, einem extrudierten und/oder geformten Teil, einem Weichschaumstoff, einem Halbhartschaumstoff und/oder einem Hartschaumstoff ausgewählt sind.

## Revendications

1. Procédé de fabrication d'un polyamide B comprenant le mélange à l'état fondu d'un polyamide A et d'un sel C d'un diacide et d'une diamine,
dans lequel le polyamide B possède un indice de viscosité plus bas, mesuré selon la norme EN ISO 307: 2019 dans l'acide sulfurique, que le polyamide A, et
dans lequel le rapport du rapport de la concentration en groupes terminaux amino du polyamide B sur la concentration en groupes terminaux amino du polyamide A, mesurées au moyen d'un titrage potentiométrique de solution de polyamide-méthanol phénol avec l'acide chlorhydrique aqueux, sur le rapport de la concentration en groupes terminaux carboxyle du polyamide B sur la concentration en groupes terminaux carboxyle du polyamide A, mesurées au moyen d'un titrage d'une solution d'alcool benzylique de polyamide avec une solution alcoolique d'hydroxyde de potassium, dans le polyamide B est de 0,8 à 1,2.

2. Procédé selon la revendication 1, dans lequel le rapport de la concentration des groupes terminaux amino du polyamide B, mesurée au moyen d'un titrage potentiométrique d'une solution de polyamide-méthanol phénol avec de l'acide chlorhydrique aqueux, sur la concentration de groupes terminaux carboxyle du polyamide B, mesurée au moyen d'un titrage d'une solution d'alcool benzylique de polyamide avec une solution alcoolique d'hydroxyde de potassium, est ≥ 0,2, de préférence ≥ 0,40, plus préférablement ≥ 0,70.

3. Procédé selon la revendication 1 ou 2, dans lequel le sel C d'un diacide et d'une diamine est présent en une quantité de 0,01 à 1 % en poids, de préférence de 0,1 à 0,9 % en poids, par rapport au polyamide A.

4. Procédé selon l'une quelconque des revendications 1 à 3, dans lequel le sel C d'un diacide et d'une diamine est un sel d'hexaméthylènediamine d'acide adipique.

5. Procédé selon l'une quelconque des revendications 1 à 4, dans lequel l'indice de viscosité du polyamide A est de 120 à 250 cm³/g, de préférence de 150 à 220 cm³/g, plus préférablement de 170 à 210.

6. Procédé selon l'une quelconque des revendications 1 à 5, dans lequel l'indice de viscosité du polyamide B est de 80 à 200 cm³/g, de préférence de 100 à 180 cm³/g, plus préférablement de 120 à 160.

7. Procédé selon l'une quelconque des revendications 1 à 6, dans lequel le polyamide A est un polyamide semi-cristallin ou amorphe ou un mélange de ceux-ci, de préférence choisi parmi un ou plusieurs éléments du groupe constitué par PA 6, PA 66, PA 6/66, PA 66/6, PA 12, PA 610, PA 46, PA 6T/6, PA 6T/66, PA 9T, PA 10T, PA 6I/6T, PA 6T/6I, PA 6T/6I/66, PA 66/6T et PA 4T, plus préférablement choisi parmi un ou plusieurs éléments du groupe constitué par PA 6, PA 66, PA 6/66 et PA 66/6.

8. Procédé selon l'une quelconque des revendications 1 à 7, dans lequel le polyamide A comprend des déchets post-industriels et/ou post-consommation, de préférence issus de processus d'extrusion choisis dans le groupe du moulage par soufflage, de l'extrusion de film, de l'extrusion de tubes, de l'extrusion de feuilles, du filage de fibres et de mélanges de ceux-ci.

9. Procédé selon l'une quelconque des revendications 1 à 8, dans lequel le polyamide A est constitué de déchets post-industriels et/ou post-consommation.

10. Procédé selon l'une quelconque des revendications 1 à 9, dans lequel le mélange à l'état fondu est effectué en présence d'une charge (D) et/ou d'autres additifs (E).

11. Procédé de préparation d'un produit de polymère, comprenant les étapes selon l'une quelconque des revendications 1 à 10, comprenant l'étape suivante :
- conversion du polyamide B pouvant être obtenu ou obtenu par le procédé selon l'une quelconque des revendications 1 à 10 pour obtenir le produit de polymère, dans lequel le produit de polymère est de préférence un granulé, un toron, une barre, une plaque, une conduite, une feuille, une couche, un film, une feuille, une fibre, un filament, un revêtement, une pièce extrudée et/ou moulée, une mousse souple, une mousse semi-rigide et/ou une mousse rigide.

12. Procédé selon la revendication 11, dans lequel la teneur du polyamide B dans le produit de polymère est de 1 % en poids ou plus, de préférence 2 % en poids ou plus, plus préférablement 5 % en poids ou plus, plus préférablement 15 % en poids ou plus, plus préférablement 30 % en poids ou plus, plus préférablement 40 % en poids ou plus, plus préférablement 60 % en poids ou plus, plus préférablement 80 % en poids ou plus, plus préférablement 90 % en poids ou plus, plus préférablement 95 % en poids ; et/ou plus
la teneur du polyamide B dans le produit de polymère étant de 100 % en poids ou moins, de préférence de 95 % en poids ou moins, plus préférablement de 90 % en poids ou moins, plus préférablement de 50 % en poids ou moins, plus préférablement de 25 % en poids ou moins, plus préférablement de 10 % en poids ou moins ; et
de préférence, dans lequel la teneur est déterminée sur la base de chaînes de contrôle d'identité préservée et/ou de ségrégation et/ou de bilan massique et/ou du book and claim, de préférence sur la base du bilan massique, de préférence la norme Certification internationale en matière de durabilité et de carbone (ISCC).

13. Polyamide B1 construit à partir de
a) 99,00 à 99,99 % en poids, de préférence 99,10 à 99,90 % en poids de polyamide B* formé à partir de motifs choisis parmi une ou plusieurs diamines en combinaison avec un ou plusieurs diacides, un ou plusieurs lactames et leurs mélanges, et
b) 0,01 à 1 % en poids, de préférence 0,1 à 0,9 % en poids de motifs issus d'un diacide et d'une diamine formant un sel C,
dans lequel les motifs issus du diacide et de la diamine formant le sel C sont différents des motifs formant le polyamide B*.

14. Polyamide B1 selon la revendication 13, dans lequel le diacide et la diamine formant le sel C sont l'acide adipique et l'hexaméthylènediamine.

15. Polyamide B1 selon la revendication 13 ou 14, dans lequel l'indice de viscosité du polyamide B est de 80 à 200 cm³/g, préférablement de 100 à 180 cm³/g, plus préférablement de 120 à 160.

16. Polyamide B1 selon l'une quelconque des revendications 13 à 15, dans lequel le polyamide B* est un polyamide semi-cristallin ou amorphe ou un mélange de ceux-ci, de préférence choisi parmi un ou plusieurs éléments du groupe constitué par PA 6, PA 12, PA 610, PA 46, PA 6T/6, PA 9T, PA 10T, PA 6I/6T, PA 6T/6I, et PA 4T, plus préférablement PA 6.

17. Composition de polyamide comprenant :
(i) le polyamide B1 selon l'une quelconque des revendications 13 à 16 ; et
(ii) éventuellement un matériau de charge (D) et
(iii) éventuellement au moins un autre additif (E), dans laquelle au moins soit un matériau de charge (D), soit un autre additif est présent.

18. Produit de polymère comprenant le polyamide B1 selon l'une quelconque des revendications 13 à 16 ou composition de polyamide selon la revendication 17, dans lequel le produit de polymère est de préférence un granulé, un toron, une barre, une plaque, une conduite, une feuille, une couche, un film, une feuille, une fibre, un filament, un revêtement, une pièce extrudée et/ou moulée, une mousse souple, une mousse semi-rigide et/ou une mousse rigide.

19. Utilisation du polyamide B1 selon l'une quelconque des revendications 13 à 16 ou de la composition de polyamide selon la revendication 17, pour la fabrication de produits de polymère choisis parmi un granulé, un toron, une barre, une plaque, une conduite, une feuille, une couche, un film, une feuille, une fibre, un filament, un revêtement, une pièce extrudée et/ou moulée, une mousse souple, une mousse semi-rigide et/ou une mousse rigide.
